(19) Europäisches Patentamt
European Patent Office
Office européen des brevets

(11) EP 4 502 030 A1

(12) **EUROPEAN PATENT APPLICATION**
published in accordance with Art. 153(4) EPC

(43) Date of publication:
**05.02.2025 Bulletin 2025/06**

(21) Application number: **23780656.7**

(22) Date of filing: **29.03.2023**

(51) International Patent Classification (IPC):
***C08J 9/18*** *(2006.01)*

(52) Cooperative Patent Classification (CPC):
**C08J 9/18**

(86) International application number:
**PCT/JP2023/012742**

(87) International publication number:
**WO 2023/190647 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055936**

(71) Applicant: **Kaneka Corporation**
**Osaka-shi, Osaka 530-8288 (JP)**

(72) Inventors:
- **MATSUDA, Akana**
  **Settsu-shi, Osaka 566-0072 (JP)**
- **KIGUCHI, Taro**
  **Settsu-shi, Osaka 566-0072 (JP)**

(74) Representative: **Hoffmann Eitle**
**Patent- und Rechtsanwälte PartmbB**
**Arabellastraße 30**
**81925 München (DE)**

# (54) POLYPROPYLENE RESIN FOAM PARTICLES, POLYPROPYLENE RESIN FOAM MOLDED BODY, AND METHOD FOR PRODUCING POLYPROPYLENE RESIN FOAM PARTICLES

(57) An object is to provide polypropylene-based resin expanded particles from which a polypropylene-based resin expanded molded product that contains a recycled resin and that has excellent blackness and excellent flame retardancy can be provided. Provided is polypropylene-based resin expanded particles containing carbon black and a base resin that contains a predetermined amount of a recycled resin, a ratio of the number of carbon black pieces having a structure size per one structure of less than $1 \times 10^4$ nm$^2$ to a total number of pieces of the carbon black being 10% to 50%.



Processed by Luminess, 75001 PARIS (FR)

## Description

Technical Field

The present invention relates to polypropylene-based resin expanded particles, a polypropylene-based resin expanded molded product, and a method for producing polypropylene-based resin expanded particles.

Background Art

A polypropylene-based resin expanded molded product is used in various applications such as not only automotive interior materials and automotive bumper core materials but also heat insulating materials, shock-absorbing packing materials, and returnable containers (e.g., Patent Literature 1).

In recent years, it has been required that a recycled resin be used during production of a resin product in order to reduce an environmental load, and use of a recycled resin is attracting attention (e.g., Patent Literature 2).

Citation List

[Patent Literature]

[Patent Literature 1]
International Publication No. WO2006/075491
[Patent Literature 2]
Japanese Patent Application Publication Tokukai No. 2011-173273

Summary of Invention

Technical Problem

However, a polypropylene-based resin expanded molded product produced with use of a recycled polypropylene-based resin is insufficient from the viewpoints of blackness and flame retardancy of a polypropylene-based resin expanded molded product, and has room for further improvement.

An embodiment of the present invention has been made in view of the above problem, and an object thereof is to provide polypropylene-based resin expanded particles from which a polypropylene-based resin expanded molded product that contains a recycled resin and that has excellent blackness and excellent flame retardancy can be provided.

Solution to Problem

Polypropylene-based resin expanded particles in accordance with an embodiment of the present invention are polypropylene-based resin expanded particles containing a base resin and carbon black, the base resin containing (i) a non-recycled polypropylene-based resin and (ii) a recycled polypropylene-based resin and/or a recycled polyethylene-based resin, a total content of the recycled polypropylene-based resin and the recycled polyethylene-based resin being 10 parts by weight to 60 parts by weight in 100 parts by weight of the base resin, and a ratio of the number of carbon black pieces having a structure size per one structure of less than $1\times10^4$ nm$^2$ to a total number of pieces of the carbon black being 10% to 50%.

A method for producing polypropylene-based resin expanded particles in accordance with an embodiment of the present invention includes: a granulation step of melting and kneading a mixture so as to obtain polypropylene-based resin particles, the mixture containing a non-recycled polypropylene-based resin, a recycled material, and carbon black A having an average structure size of not less than $0.2\times10^4$ nm$^2$ and less than $4.0\times10^4$ nm$^2$; a dispersion step of dispersing the polypropylene-based resin particles, an aqueous dispersion medium, and a blowing agent in a vessel; a heating step of increasing a temperature in the vessel to a temperature that is not less than a softening temperature of the polypropylene-based resin particles; a pressurization step of raising an internal pressure of the vessel; and a releasing step of releasing one end of the vessel so as to release a dispersion slurry inside the vessel into a region having a pressure lower than the internal pressure of the vessel, the recycled material containing (i) a recycled polypropylene-based resin and/or a recycled polyethylene-based resin and (ii) carbon black B having an average structure size of not less than $5.0\times10^4$ nm$^2$ and less than $9.0\times10^4$ nm$^2$, and the recycled material being used in an amount such that a total content of the recycled polypropylene-based resin and the recycled polyethylene-based resin is 10 parts by weight to 60 parts by weight in

100 parts by weight of the base resin containing the non-recycled polypropylene-based resin and the recycled polypropylene-based resin and/or the recycled polyethylene-based resin.

An embodiment of the present invention includes the following features.

Advantageous Effects of Invention

An embodiment of the present invention brings about an effect of making it possible to provide polypropylene-based resin expanded particles from which a polypropylene-based resin expanded molded product that contains a recycled resin and that has excellent blackness and excellent flame retardancy can be provided.

Description of Embodiments

The following description will discuss an embodiment of the present invention. The present invention is not, however, limited to the embodiments below. The present invention is not limited to configurations described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

In the present specification, "a structural unit derived from an X monomer" contained in a polymer, a copolymer, or a resin may be referred to as "X unit".

In the present specification, a copolymer containing, as structural units, an $X^1$ unit, an $X^2$ unit, ... , and an $X^n$ unit (where n is an integer of 2 or more) may be referred to as "$X^1/X^2/ ... X^n$ copolymer", unless otherwise stated. The $X^1/X^2/ ... X^n$ copolymer is not limited to any particular polymerization form unless otherwise explicitly stated, but may be a random copolymer, an alternating copolymer, a block copolymer, or a graft copolymer.

[1. Polypropylene-based resin expanded particles]

Polypropylene-based resin expanded particles in accordance with an embodiment of the present invention are polypropylene-based resin expanded particles containing a base resin and carbon black, the base resin containing (i) a non-recycled polypropylene-based resin and (ii) a recycled polypropylene-based resin and/or a recycled polyethylene-based resin, a total content of the recycled polypropylene-based resin and the recycled polyethylene-based resin being 10 parts by weight to 60 parts by weight in 100 parts by weight of the base resin, and a ratio of the number of carbon black pieces having a structure size per one structure of less than $1 \times 10^4$ $nm^2$ to a total number of pieces of the carbon black being 10% to 50%.

By molding the polypropylene-based resin expanded particles in accordance with an embodiment of the present invention by a known method, it is possible to provide a polypropylene-based resin expanded molded product.

In the present specification, the "polypropylene-based resin expanded particles" may be referred to as "expanded particles", the "polypropylene-based resin expanded particles in accordance with an embodiment of the present invention" may be referred to as "present expanded particles", and the "polypropylene-based resin expanded molded product" may be referred to as an "expanded molded product".

The present expanded particles have the above feature, and therefore bring about an advantage of making it possible to provide an expanded molded product that has excellent blackness and excellent flame retardancy. Further, the present expanded particles contain a recycled polypropylene-based resin and/or a recycled polyethylene-based resin as described earlier. Thus, it can be said that the present expanded particles impose a low environmental load. In other words, since a cycle polypropylene-based resin and/or a recycled polyethylene-based resin is/are used in an embodiment of the present invention, an embodiment of the present invention makes it possible to not only reduce environmental pollution but also greatly reduce an amount of plastic waste produced and an amount of plastic used for production. This enables an embodiment of the present invention to contribute to achievement of, for example, Goal 12 "Ensure sustainable consumption and production patterns." and Goal 14 "Conserve and sustainably use the oceans, seas and marine resources for sustainable development." of Sustainable Development Goals (SDGs).

<Component>

(2-1. Base resin)

In the present specification, a base resin is intended to mean a resin component that substantially constitutes

polypropylene-based resin particles, polypropylene-based resin expanded particles, and a polypropylene-based resin expanded molded product. The base resin contains at least (i) a non-recycled polypropylene-based resin and (ii) a recycled polypropylene-based resin and/or a recycled polyethylene-based resin.

In the present specification, the "polypropylene-based resin" is intended to mean a resin that contains a propylene unit in an amount of not less than 50 mol% in 100 mol% of all structural units contained in the resin.

In the present specification, the "structural units derived from a propylene monomer" may be referred to as "propylene units".

In the present specification, the "polyethylene-based resin" is intended to mean a resin that contains ethylene units in a proportion of not less than 50 mol% in 100 mol% of all the structural units contained in the resin.

In the present specification, the "structural units derived from an ethylene monomer" may be referred to as "ethylene units".

Note that, in the present specification, a resin such that 100 mol% of all the structural units contained in the resin consist of 50 mol% of propylene units and 50 mol% of ethylene units is referred to as a "polypropylene-based resin".

In the present specification, the "recycled polypropylene-based resin" is intended to mean a polypropylene-based resin that has undergone a form of a polypropylene-based resin product (e.g., expanded particles, an expanded molded product, a film, packaging containers such as a food tray, a bag, and a bottle, sundry goods such as a case for clothes and a plastic file folder, etc.) at least one time and then has been made into a form of a polypropylene-based resin (or polypropylene-based resin particles) again by means of, for example, melting. Further, in the present specification, the "recycled polyethylene-based resin" is intended to mean a polyethylene-based resin that has undergone a form of a polyethylene-based resin product (e.g., expanded particles, an expanded molded product, a film, packaging containers such as a food tray, a bag, and a bottle, sundry goods such as a case for clothes and a plastic file folder, etc.) at least one time and then has been made into a form of a polyethylene-based resin (or polyethylene-based resin particles) again by means of, for example, melting. In the present specification, the recycled polypropylene-based resin or the recycled polyethylene-based resin may be referred to as "recycled resin", and the recycled polypropylene-based resin and the recycled polyethylene-based resin may be collectively referred to as "recycled resin". Furthermore, in the present specification, the "non-recycled polypropylene-based resin" is intended to mean a polypropylene-based resin that has never undergone a form of a polypropylene-based resin product.

A method for producing a recycled resin, in other words, a method for recycling a polypropylene-based resin product and a polyethylene-based resin product is not particularly limited, and a known method can be employed. Examples of the method include a method in which a polypropylene-based resin product or a polyethylene-based resin product is crushed and melted, and a method in which such a product is chopped.

(Structure of polypropylene-based resin)

Only in the present section, "polypropylene-based resin" is intended to mean both the non-recycled polypropylene-based resin and the recycled polypropylene-based resin, unless mentioned otherwise. The following description will discuss a structure of the polypropylene-based resin.

The polypropylene-based resin may be (i) a homopolymer of propylene, (ii) a block copolymer, an alternating copolymer, a random copolymer, or a graft copolymer that is a copolymer of propylene and a monomer other than propylene, or (iii) a mixture of at least two thereof.

In addition to the propylene units, the polypropylene-based resin may have one or more units of structural units derived from a monomer(s) other than a propylene monomer or may have one or more types of structural units derived from monomers other than a propylene monomer. A "monomer(s) other than a propylene monomer" used in production of the polypropylene-based resin may be referred to as a "comonomer(s)". The "structural unit(s) derived from a monomer(s) other than a propylene monomer" contained in the polypropylene-based resin may be referred to as a "comonomer unit(s)".

Examples of such a comonomer(s) include $\alpha$-olefins having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

Specific examples of the polypropylene-based resin include polypropylene homopolymers, ethylene/propylene block copolymers, 1-butene/propylene block copolymers, ethylene/ 1-butene/propylene block copolymers, ethylene/-propylene alternating copolymers, 1-butene/propylene alternating copolymers, ethylene 1-butene/propylene alternating copolymers, ethylene/propylene random copolymers, 1-butene/propylene random copolymers, ethylene/ 1-butene/propylene random copolymers, propylene/chlorinated vinyl copolymers, propylene/maleic anhydride copolymers, and styrene-modified polypropylene-based resins. As the polypropylene-based resin, one of these may be used alone, or two or more of these may be used in combination.

From the viewpoint of molding processability, the non-recycled polypropylene-based resin is preferably (a) an alternating copolymer which is composed of propylene units and comonomer units and in which the propylene units and

the comonomer units are alternately arranged, and/or (b) a random copolymer which is composed of propylene units and comonomer units and in which the propylene units and the comonomer units are arranged in a random order. The non-recycled polypropylene-based resin preferably contains at least one selected from the group consisting of an ethylene/propylene alternating copolymer, an ethylene/1-butene/propylene alternating copolymer, an ethylene/propylene random copolymer, and an ethylene/1-butene/propylene random copolymer because such a copolymer is easily available.

From the viewpoints of molding processability and availability, the non-recycled polypropylene-based resin contains, in 100% by weight of the non-recycled polypropylene-based resin, preferably not less than 60% by weight, more preferably not less than 70% by weight, more preferably not less than 80% by weight, even more preferably not less than 90% by weight, and particularly preferably not less than 95% by weight, of at least one selected from the group consisting of an ethylene/propylene alternating copolymer, an ethylene/ 1-butene/propylene alternating copolymer, an ethylene/propylene random copolymer, and an ethylene/1-butene/propylene random copolymer. The non-recycled polypropylene-based resin most preferably consists only of at least one selected from the group consisting of an ethylene/propylene alternating copolymer, an ethylene/1-butene/propylene alternating copolymer, an ethylene/propylene random copolymer, and an ethylene/1-butene/propylene random copolymer.

From the viewpoint of molding processability, the recycled polypropylene-based resin is preferably (a) a block copolymer which is composed of propylene units and comonomer units and which is composed of a block structure consisting only of the propylene units and a block structure consisting only of the comonomer units, (b) an alternating copolymer which is composed of propylene units and comonomer units and in which the propylene units and the comonomer units are alternately arranged, and/or (c) a random copolymer which is composed of propylene units and comonomer units and in which the propylene units and the comonomer units are arranged in a random order. In the block copolymer, an order in which the block structure consisting only of the propylene units and the block structure consisting only of the comonomer units are arranged is not particularly limited. The recycled polypropylene-based resin preferably contains at least one selected from the group consisting of an ethylene/propylene block copolymer, an ethylene/1-butene/propylene block copolymer, an ethylene/propylene alternating copolymer, an ethylene/1-butene/propylene alternating copolymer, an ethylene/propylene random copolymer, and an ethylene/1-butene/propylene random copolymer because such a copolymer is easily available.

From the viewpoints of molding processability and availability, the recycled polypropylene-based resin contains, in 100% by weight of the recycled polypropylene-based resin, preferably not less than 60% by weight, more preferably not less than 70% by weight, more preferably not less than 80% by weight, even more preferably not less than 90% by weight, and particularly preferably not less than 95% by weight, of at least one selected from the group consisting of an ethylene/propylene alternating copolymer, an ethylene/1-butene/propylene alternating copolymer, an ethylene/propylene random copolymer, and an ethylene/propylene random copolymer. The recycled polypropylene-based resin most preferably consists only of at least one selected from the group consisting of an ethylene/propylene block copolymer, an ethylene/ 1-butene/propylene block copolymer, an ethylene/propylene alternating copolymer, an ethylene/ 1-butene/propylene alternating copolymer, an ethylene/propylene random copolymer, and an ethylene/ 1-butene/propylene random copolymer.

(Physical properties of non-recycled polypropylene-based resin)

The non-recycled polypropylene-based resin in accordance with an embodiment of the present invention has a melting point that is not particularly limited and that is preferably 135°C to 160°C, more preferably 137°C to 155°C, and even more preferably 139°C to 153°C. (i) The non-recycled polypropylene-based resin that has a melting point of not less than 135°C allows an expanded molded product obtained from the present expanded particles to have excellent heat resistance, and (ii) the non-recycled polypropylene-based resin that has a melting point of not more than 160°C makes it easy to increase an expansion rate of expanded particles in production of the present expanded particles.

In the present specification, the melting point of the non-recycled polypropylene-based resin is a value measured and determined by a differential scanning calorimetry (hereinafter referred to as "DSC method"). A specific operational procedure is as follows: (1) a temperature of 5 mg to 6 mg of the non-recycled polypropylene-based resin is increased from 40°C to 220°C at a temperature increase rate of 10°C/min so that the non-recycled polypropylene-based resin is melted; (2) thereafter, the temperature of the melted non-recycled polypropylene-based resin is decreased from 220°C to 40°C at a temperature decrease rate of 10°C/min so that the non-recycled polypropylene-based resin is crystallized; and (3) then, the temperature of the crystallized non-recycled polypropylene-based resin is further increased from 40°C to 220°C at a temperature increase rate of 10°C/min. It is possible to determine, as the melting point of the non-recycled polypropylene-based resin, a temperature at a peak (melting peak) in a DSC curve of the non-recycled polypropylene-based resin which DSC curve is obtained during the second temperature increase (i.e., in (3)). Note that, in a case where a plurality of peaks (melting peaks) are present in a DSC curve of the non-recycled polypropylene-based resin which DSC curve is obtained during the second temperature increase by the above-described method, a temperature at a peak (melting peak) having

the greatest melting heat quantity is regarded as the melting point of the non-recycled polypropylene-based resin. As a differential scanning calorimeter, it is possible to use, for example, DSC7020 manufactured by Hitachi High-Tech Science Corporation.

The non-recycled polypropylene-based resin used in an embodiment of the present invention has, at 230°C, an MFR that is not particularly limited and that is 1 g/10 minutes to 40 g/10 minutes, more preferably 2 g/10 minutes to 35 g/10 minutes, even more preferably 3 g/10 minutes to 30 g/10 minutes, and particularly preferably 3 g/10 minutes to 10 g/ 10 minutes. The non-recycled polypropylene-based resin that has an MFR of not less than 1 g/10 minutes at 230°C tends to make it easy to increase an expansion rate of expanded particles in production of the present expanded particles. The non-recycled polypropylene-based resin that has an MFR of not more than 40 g/10 minutes at 230°C does not cause any fear that resulting expanded particles may have cells in communication with each other. This results in (i) a tendency for an expanded molded product obtained from the present expanded particles to have a favorable compressive strength or (ii) a tendency for the expanded molded product to have a good surface property. Note that, in the present specification, "air bubble" of expanded particles may be referred to as "cell". That is, in the present specification, "air bubble" may be read as "cell", and "cell" may be read as "air bubble".

Further, a case is considered where the non-recycled polypropylene-based resin has an MFR in a range of 1 g/ 10 minutes to 40 g/10 minutes at 230°C. This case makes it easy to obtain polypropylene-based resin expanded particles that have a relatively high expansion rate. In addition, this case is advantageous in that an expanded molded product obtained from the present expanded particles has excellent surface appearance and has a low rate of dimensional shrinkage.

In the present specification, the MFR of the non-recycled polypropylene-based resin at 230°C is a value measured and obtained with use of an MFR measurement device described in JIS K7210: 1999 and under the following conditions: a diameter $\varphi$ of an orifice is $2.0959 \pm 0.005$ mm; a length of the orifice is $8.000 \pm 0.025$ mm; a load is 2.16 kgf; and a temperature is 230°C ($230 \pm 0.2$°C).

(Physical properties of recycled polypropylene-based resin)

A melting point of the recycled polypropylene-based resin in accordance with an embodiment of the present invention is not particularly limited, and is preferably 135°C to 160°C, more preferably 137°C to 155°C, and even more preferably 139°C to 153°C. (i) The recycled polypropylene-based resin that has a melting point of not less than 135°C allows an expanded molded product obtained from the present expanded particles to have excellent heat resistance, and (ii) the recycled polypropylene-based resin that has a melting point of not more than 160°C makes it easy to increase an expansion rate of expanded particles in production of the present expanded particles.

In the present specification, the melting point of the recycled polypropylene-based resin is a value measured and determined also by the above-described DSC method as in the case of the melting point of the non-recycled polypropylene-based resin, except that the recycled polypropylene-based resin is used instead of the non-recycled polypropylene-based resin.

The recycled polypropylene-based resin used in an embodiment of the present invention has, at 230°C, an MFR that is not particularly limited and that is 1 g/10 minutes to 40 g/10 minutes, more preferably 2 g/10 minutes to 35 g/10 minutes, even more preferably 3 g/10 minutes to 30 g/10 minutes, and particularly preferably 3 g/10 minutes to 10 g/10 minutes. (a) The recycled polypropylene-based resin that has an MFR of not less than 1.0 g/10 minutes at 230°C has an advantage of making it easy to increase an expansion rate of expanded particles in production of the present expanded particles, and (b) the recycled polypropylene-based resin that has an MFR of not more than 40.0 g/10 minutes at 230°C does not cause any fear that resulting expanded particles may have cells in communication with each other.

In the present specification, a value of the MFR of the recycled polypropylene-based resin at 230°C is a value measured and obtained by a method identical to the method in which the MFR of the non-recycled polypropylene-based resin at 230°C is measured and obtained, except that the recycled polypropylene-based resin is used instead of the non-recycled polypropylene-based resin.

The non-recycled polypropylene-based resin can be obtained by a known method. A polymerization catalyst to be used in synthesizing the polypropylene-based resin is not limited to any particular one. Possible examples of the polymerization catalyst include a Ziegler catalyst.

The base resin contains the polypropylene-based resin (the non-recycled polypropylene-based resin and the recycled polypropylene-based resin) in an amount of preferably 80 parts by weight to 100 parts by weight, and more preferably 90 parts by weight to 100 parts by weight, in 100 parts by weight of the base resin. The above feature is advantageous in that a reduction in strength of a resulting expanded molded product is small.

The base resin contains at least one of the recycled polypropylene-based resin and the recycled polyethylene-based resin. The base resin may further contain the non-recycled polyethylene-based resin. In the present specification, "non-recycled polyethylene-based resin" is intended to mean a polyethylene-based resin that has never undergone a form of a polyethylene-based resin product.

(Structure of polyethylene-based resin)

Only in the present section, "polyethylene-based resin" is intended to mean both the non-recycled polyethylene-based resin and the recycled polyethylene-based resin, unless mentioned otherwise. The following description will discuss a structure of the polyethylene-based resin.

The polyethylene-based resin may be (a) a homopolymer of ethylene, (b) a block copolymer, an alternating copolymer, a random copolymer, or a graft copolymer that is a copolymer of ethylene and a monomer other than ethylene, or (c) a mixture of at least two thereof.

The polyethylene-based resin may have, in addition to the ethylene units, one or more units of structural units derived from a monomer(s) other than an ethylene monomer or may have one or more types of structural units derived from monomers other than an ethylene monomer. The "structural unit(s) derived from a monomer(s) other than an ethylene monomer" contained in the polyethylene-based resin may be referred to as a "comonomer unit(s)".

Examples of such a comonomer(s) include (a) $\alpha$-olefins having 3 to 12 carbon atoms, such as propylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene, and (b) vinyl-based monomers such as vinyl acetate.

Specific examples of the polyethylene-based resin include (a) polyethylene homopolymers, (b) ethylene/$\alpha$-olefin copolymers such as ethylene/propylene block copolymers, 1-butene/ethylene block copolymers, ethylene 1-butene/-propylene block copolymers, ethylene/propylene alternating copolymers, 1-butene/ethylene alternating copolymers, ethylene 1-butene/propylene alternating copolymers, ethylene/propylene random copolymers, 1-butene/ethylene random copolymers, and ethylene 1-butene/propylene random copolymers, (c) ethylene/vinyl-based unit copolymers such as ethylene/chlorinated vinyl copolymers and ethylene/maleic anhydride copolymers, (d) styrene-modified polyethylene-based resins, and (e) chlorinated polyethylenes. As the polyethylene-based resin, one of these may be used alone, or two or more of these may be used in combination.

Examples of the polyethylene-based resin include high-density polyethylene (HDPE or PE-HD), medium-density polyethylene (MDPE or PE-MD), and low-density polyethylene (LDPE or PE-LD) from the viewpoint of a difference in density. JIS K 6760 defines density ranges of HDPE, MDPE, and LDPE as not less than 942 kg/$m^3$, not less than 930 kg/$m^3$ and less than 942kg/$m^3$, and not less than 910 kg/$m^3$ and less than 930 kg/$m^3$, respectively.

The low-density polyethylene (LPDE) can be further classified into (a) low-density polyethylene which is produced by a high-pressure method and which has a long-chain branch in addition to a short-chain branch such as an ethyl group (hereinafter also referred to as branched low-density polyethylene), and (b) low-density polyethylene which is produced with use of a transition metal catalyst under medium or low pressure and the branch of which is a short-chain branch (hereinafter also referred to as linear low-density polyethylene (LLDPE or PE-LLD)). The branched low-density polyethylene is a homopolymer of polyethylene. The linear low-density polyethylene is a copolymer obtained by linearly polymerizing ethylene and $\alpha$-olefin such as 1-butene, 1-hexene, and/or 4-methyl-1-pentene, and has a short-chain branch derived from a side chain of the $\alpha$-olefin. Thus, the linear low-density polyethylene can also be referred to as an ethylene/$\alpha$-olefin copolymer.

The recycled polyethylene-based resin may contain at least one selected from the group consisting of high-density polyethylene, medium-density polyethylene, and low-density polyethylene.

(Physical properties of recycled polyethylene-based resin)

In an embodiment of the present invention, the recycled polyethylene-based resin has a melting point that is not particularly limited and that is preferably 100°C to 140°C, and more preferably 110°C to 130°C. (a) The recycled polyethylene-based resin that has a melting point of not less than 100°C is advantageous in that impact resistance of an expanded molded product is less likely to be reduced, and (b) the recycled polyethylene-based resin that has a melting point of not more than 140°C is advantageous in that a surface of an expanded molded product has good smoothness.

In the present specification, the melting point of the recycled polyethylene-based resin is a value measured and determined also by the above-described DSC method as in the case of the melting point of the non-recycled polypropylene-based resin, except that the recycled polyethylene-based resin is used instead of the non-recycled polypropylene-based resin.

In an embodiment of the present invention, a total content of the recycled polypropylene-based resin and the recycled polyethylene-based resin is 10 parts by weight to 60 parts by weight, preferably 10 parts by weight to 60 parts by weight, more preferably 15 parts by weight to 60 parts by weight, even more preferably 18 parts by weight to 60 parts by weight, and particularly preferably 20 parts by weight to 60 parts by weight, in 100 parts by weight of the base resin. The above feature is advantageous in that it is possible to further reduce an environmental load.

In an embodiment of the present invention, where the total content of the recycled polypropylene-based resin and the recycled polyethylene-based resin is 100 parts by weight, (a) it is preferable that the recycled polypropylene-based resin be contained in an amount of 60 parts by weight to 100 parts by weight and that the recycled polyethylene-based resin

be contained in an amount of 0 part by weight to 40 parts by weight, (b) it is more preferable that the recycled polypropylene-based resin be contained in an amount of 70 parts by weight to 100 parts by weight and that the recycled polyethylene-based resin be contained in an amount of 0 part by weight to 30 parts by weight, (c) it is more preferable that the recycled polypropylene-based resin be contained in an amount of 80 parts by weight to 100 parts by weight and that the recycled polyethylene-based resin be contained in an amount of 0 part by weight to 20 parts by weight, (d) it is even more preferable that the recycled polypropylene-based resin be contained in an amount of 90 parts by weight to 100 parts by weight and that the recycled polyethylene-based resin be contained in an amount of 0 part by weight to 10 parts by weight, and (e) it is particularly preferable that the recycled polypropylene-based resin be contained in an amount of 95 parts by weight to 100 parts by weight and that the recycled polyethylene-based resin be contained in an amount of 0 part by weight to 5 parts by weight. The above feature is advantageous in that an expanded molded product has good impact resistance and good surface smoothness.

The base resin contains the polypropylene-based resin (the non-recycled polypropylene-based resin and the recycled polypropylene-based resin) and the recycled polyethylene-based resin in a total amount of preferably 80 parts by weight to 100 parts by weight, more preferably 90 parts by weight to 100 parts by weight, and even more preferably 95 parts by weight to 100 parts by weight, in 100 parts by weight of the base resin. The above feature is advantageous in that a reduction in strength of a resulting expanded molded product is small. The base resin may be composed only of the polypropylene-based resin (the non-recycled polypropylene-based resin and the recycled polypropylene-based resin) and the recycled polyethylene-based resin.

(Another resin, etc.)

The base resin may further contain a resin other than the non-recycled polypropylene-based resin, the recycled polypropylene-based resin, and the recycled polyethylene-based resin (such a resin may be referred to as "another resin, etc.") provided that an effect in accordance with an embodiment of the present invention is not impaired. Examples of the another resin, etc. include (a) styrene-based resins such as polystyrenes, styrene/maleic anhydride copolymers, and styrene/ethylene copolymers, (b) polyolefin-based waxes such as propylene-$\alpha$-olefin-based waxes, and (c) olefin-based rubbers such as ethylene/propylene rubbers, ethylene/butene rubbers, ethylene/hexene rubbers, and ethylene/octene rubbers. The another resin is contained in an amount of preferably not more than 10 parts by weight, and more preferably not more than 5 parts by weight, with respect to 100 total parts by weight of the non-recycled polypropylene-based resin, the recycled polypropylene-based resin, and the recycled polyethylene-based resin.

(2-2. Carbon black)

The present expanded particles contain carbon black. More specifically, the present expanded particles contain carbon black having a structure size per one structure of less than $1\times10^4$ $nm^2$. In the carbon black contained in the present expanded particles, a ratio of the number of carbon black pieces having a structure size per one structure of less than $1\times10^4$ $nm^2$ to a total number of pieces of the carbon black is 10% to 50%. The inventor of the present invention uniquely obtained, through diligent research, new knowledge that the expanded particles containing, in the foregoing range, the carbon black having the foregoing structure size surprisingly make it possible to provide an expanded molded product which has excellent blackness and excellent flame retardancy. Further, the inventor of the present invention also uniquely obtained, through diligent research, new knowledge that the expanded particles containing, in the foregoing range, the carbon black having the foregoing structure size surprisingly make it possible to provide an expanded molded product which also has reduced color unevenness.

A method for measuring the structure size of the carbon black will be described in detail in Examples described later.

The carbon black is exemplified by, but not particularly limited to, channel black, roller black, disk, gas furnace black, oil furnace black, thermal black, and acetylene black. As the carbon black, one of these may be used alone, or two or more of these may be used in combination.

The carbon black may have a shape that is not particularly limited and that may be a spherical shape, a substantially spherical shape, or the like.

In the present expanded particles, a ratio of the number of carbon black pieces having a structure size per one structure of less than $1\times10^4$ $nm^2$ to a total number of pieces of the carbon black is 10% to 50%, and preferably 15% to 30%. The above feature is advantageous in that an expanded molded product which has reduced color unevenness and which has excellent blackness and excellent flame retardancy can be obtained even in a case where a recycled resin is used.

In an embodiment of the present invention, the carbon black A having an average structure size of not less than $0.2\times10^4$ $nm^2$ and less than $4.0\times10^4$ $nm^2$ is used in order to increase blackness of expanded particles and a molded product made from expanded particles. In other words, the present expanded particles contain the carbon black A. The carbon black A in the expanded particles has an average structure size of preferably not less than $0.2\times10^4$ $nm^2$ and less

than $4.0\times10^4$ nm$^2$, more preferably not less than $0.2\times10^4$ nm$^2$ and less than $3.5\times10^4$ nm$^2$, more preferably not less than $0.5\times10^4$ nm$^2$ and less than $3.5\times10^4$ nm$^2$, more preferably not less than $1.0\times10^4$ nm$^2$ and less than $3.5\times10^4$ nm$^2$, more preferably not less than $1.5\times10^4$ nm$^2$ and less than $3.5\times10^4$ nm$^2$, more preferably not less than $2.0\times10^4$ nm$^2$ and less than $3.5\times10^4$ nm$^2$, even more preferably not less than $2.5\times10^4$ nm$^2$ and less than $3.5\times10^4$ nm$^2$, and particularly preferably not less than $3.0\times10^4$ nm$^2$ and less than $3.5\times10^4$ nm$^2$. The above feature is advantageous in that an expanded molded product which has reduced color unevenness and which has excellent blackness and excellent flame retardancy can be obtained even in a case where a recycled resin is used.

The present expanded particles contain the carbon black B having an average structure size of not less than $5.0\times10^4$ nm$^2$ and less than $9.0\times10^4$ nm$^2$. The carbon black B has an average structure size of preferably not less than $5.0\times10^4$ nm$^2$ and less than $9.0\times10^4$ nm$^2$, more preferably not less than $5.0\times10^4$ nm$^2$ and less than $8.0\times10^4$ nm$^2$, more preferably not less than $5.0\times10^4$ nm$^2$ and less than $7.5\times10^4$ nm$^2$, more preferably not less than $5.0\times10^4$ nm$^2$ and less than $7.0\times10^4$ nm$^2$, even more preferably not less than $5.0\times10^4$ nm$^2$ and less than $6.5\times10^4$ nm$^2$, and particularly preferably not less than $5.0\times10^4$ nm$^2$ and less than $6.0\times10^4$ nm$^2$. The above feature is advantageous in that an expanded molded product which has reduced color unevenness and which has excellent blackness and excellent flame retardancy can be obtained even in a case where a recycled resin is used. As described later, the recycled material can contain the carbon black that has an average structure size of not less than $5.0\times10^4$ nm$^2$ and less than $9.0\times10^4$ nm$^2$, i.e., the carbon black B. Thus, the carbon black B can be derived from the recycled material. Note that the carbon black B may be used separately from the recycled material.

In an embodiment of the present invention, carbon black C having an average structure size of not less than $10\times10^4$ nm$^2$ is preferably not used, or is preferably used in a small amount even in a case where the carbon black C is used. In other words, the present expanded particles preferably contain a small amount of the carbon black C having an average structure size of not less than $10\times10^4$ nm$^2$. For example, it is preferable that the present expanded particles contain no carbon black C having an average structure size of not less than $10\times10^4$ nm$^2$ or contain the carbon black C in an amount of more than 0 part by weight and less than 0.5 parts by weight with respect to 100 parts by weight of the base resin. In the course of diligent research, the inventor of the present invention uniquely obtained new knowledge that the above feature surprisingly makes it possible to obtain an expanded molded product which has more excellent flame retardancy.

The carbon black A is contained in the present expanded particles in an amount of preferably 0.1 parts by weight to 5.0 parts by weight, more preferably 0.3 parts by weight to 4.5 parts by weight, more preferably 0.5 parts by weight to 4.3 parts by weight, more preferably 1.0 part by weight to 4.0 parts by weight, even more preferably 1.5 parts by weight to 3.5 parts by weight, still more preferably 2.0 parts by weight to 3.5 parts by weight, and particularly preferably 2.5 parts by weight to 3.0 parts by weight, with respect to 100 parts by weight of the base resin. In the course of diligent research, the inventor of the present invention uniquely obtained new knowledge that the above feature surprisingly makes it possible to obtain an expanded molded product which has more excellent blackness.

The carbon black B is contained in the present expanded particles in an amount of preferably 0.10 parts by weight to 2.00 parts by weight, more preferably 0.10 parts by weight to 1.80 parts by weight, and even more preferably 0.30 parts by weight to 1.80 parts by weight, with respect to 100 parts by weight of the base resin. In the course of diligent research, the inventor of the present invention uniquely obtained new knowledge that the above feature surprisingly makes it possible to obtain an expanded molded product which has reduced color unevenness and which has more excellent flame retardancy.

(2-3. Additive)

The present expanded particles may optionally further contain an additive other than (a) the non-recycled polypropylene-based resin, (b) the recycled polypropylene-based resin and/or the recycled polyethylene-based resin, and (c) the carbon black A and the carbon black B. Examples of the additive include a coloring agent other than carbon black, a water absorbing substance, an expansion nucleating agent, an antistatic agent, a flame retarder, an antioxidant, a photo stabilizer, a crystal nucleating agent, an electrically conductive agent, and a lubricant. Such an additive may be directly added to a blended product (described later) or to a polypropylene-based resin composition in production of polypropylene-based resin particles.

(Expansion nucleating agent)

The expansion nucleating agent is a substance that can be used in production of the present expanded particles and that can be an expansion nucleus during expansion of resin particles. In production of the present expanded particles, the expansion nucleating agent is preferably used, in other words, the present expanded particles preferably contain the expansion nucleating agent. The above feature is advantageous in that expanded particles have a uniform cell structure.

In the present specification, the expansion nucleating agent is an inorganic compound, and is intended to mean a substance remaining as a residue after burning at 750°C for not less than 1 hour. The expansion nucleating agent may be referred to as "ash" in the present specification. Examples of the expansion nucleating agent include silica (silicon dioxide),

silicates, alumina, diatomaceous earth, calcium carbonate, magnesium carbonate, calcium phosphate, feldspar apatite, barium sulfate, and zinc borate. Examples of the silicates include talc, magnesium silicate, kaolin, halloysite, dickite, aluminum silicate, and zeolite. One type of these expansion nucleating agents may be used alone, or two or more types thereof may be used in mixture. In a case where two or more types of the expansion nucleating agents are used in mixture, a mixing ratio may be adjusted as appropriate according to a purpose.

In an embodiment of the present invention, the expansion nucleating agent preferably contains talc, and is preferably talc. This is because talc tends to allow expanded particles to have a more uniform cell structure, and to reduce color unevenness of the expanded particles.

The following description will discuss an amount of the expansion nucleating agent used in production of the present expanded particles, in other words, an amount of the expansion nucleating agent contained in the present expanded particles. The amount of the expansion nucleating agent contained in the present expanded particles is intended to mean a total mixed amount of the expansion nucleating agent in the present expanded particles, including an amount of the expansion nucleating agent contained in the recycled material. From the viewpoint of uniformity of an average cell diameter, the expansion nucleating agent is contained in the present expanded particles in an amount of preferably 0.001 parts by weight to 2.00 parts by weight, more preferably 0.01 parts by weight to 1.00 part by weight, even more preferably 0.020 parts by weight to 0.50 parts by weight, still more preferably 0.05 parts by weight to 0.50 parts by weight, more preferably 0.05 parts by weight to 0.50 parts by weight, more preferably 0.10 parts by weight to 0.50 parts by weight, even more preferably 0.20 parts by weight to 0.50 parts by weight, and particularly preferably 0.20 parts by weight to 0.45 parts by weight, with respect to 100 parts by weight of the base resin. In an in-mold expanded molded product composed of conventional expanded particles, color unevenness tends to easily occur in a case where talc is contained in the in-mold expanded molded product in an amount of not less than 0.20 parts by weight. However, an in-mold expanded molded product composed of the present expanded particles has good blackness without color unevenness even in a case where talc is contained in the in-mold expanded molded product in an amount of not less than 0.20 parts by weight.

A specific method for determining a type of the expansion nucleating agent is not particularly limited, and a known qualitative analysis can be applied. A specific aspect of the qualitative analysis of the present expansion nucleating agent may be, for example, a method in which ash is analyzed by infrared spectroscopic analysis as described in detail in Examples below, may be a method in which chloroform is used to fractionate a solvent so as to analyze a chloroform-insoluble product by infrared spectroscopic analysis, or may be a method in which heated xylene is used to carry out melt fractionation so as to analyze a xylene-insoluble product by an X-ray diffraction method.

Examples of the flame retarder that can be used in an embodiment of the present invention include an intumescent-based flame retarder, a hindered amine-based flame retarder, a bromine-based flame retarder, a phosphorus-based flame retarder, and a phosphoric ester-based flame retarder. By containing the hindered amine-based flame retarder, the polyolefin-based resin expanded particles of the present invention make it possible to achieve targeted flame retardancy with a small amount of flame retarder added.

The present expanded particles preferably contain a hindered amine-based flame retarder. The above feature brings about an effect of making it possible to achieve targeted flame retardancy with a small amount of flame retarder added.

In the present specification, the "hindered amine" is intended to mean a hindered amine that has an OR group directly substituted on an N atom (where R is a saturated or unsaturated monovalent hydrocarbon group) (hereinafter such a hindered amine may also be referred to as an N-substituted hindered amine). The hindered amine is not limited to any particular one, provided that the hindered amine has an OR group directly substituted on the N atom. A known hindered amine can be used as the hindered amine. As the hindered amine, one type of hindered amine may be used alone or two or more types of hindered amines may be used in combination.

The hindered amine is preferably an N-substituted hindered amine that contains a triazine component (hereinafter such an N-substituted hindered amine may also be referred to as a "triazine skeleton-containing hindered amine"). This is because the N-substituted hindered amine can exhibit a flame retardant effect in a wide temperature range. The triazine skeleton-containing hindered amine is not limited to any particular one, and is preferably (i) a compound of CAS No. 191680-81-6 ((i-1) which is a reaction product of N,N'-bis(3-aminopropyl)ethylenediamine and a product obtained by causing cyclohexane to react with a reaction product of peroxidized N-butyl-2,2,6,6,-tetramethyl-4-piperidinamine and 2,4,6-trichloro-1,3,5-triazine, (i-2) which can also be said to be a reaction product of 2,4-bis((1-cyclohexyloxy-2,2,6,6-tetramethylpiperidine-4-yl)butylamino)-6-chloro-S-triazine and N,N'-bis(3-aminopropyl)ethylenediamine, (i-3) which can also be said to be N,N',N'''-tris{2,4-bis[(1-hydrocarbyloxy-2,2,6,6-tetramethylpiperidine-4-yl)alkylamino]-s-triazine-6-yl}-3,3'-ethylenediiminodipropylamine) and/or (ii) bis(1-undecanoxy-2,2,6,6-tetramethylpiperidine-4-yl)carbonate. It is also possible to use an isomer of the triazine skeleton-containing hindered amine described above and a crosslinked derivative of the triazine skeleton-containing hindered amine described above. The triazine skeleton-containing hindered amine is disclosed in more detail in page 2, line 32 to page 4, line 6 of the specification of European Patent No. 0889085.

A commercially available product can be suitably used as the triazine skeleton-containing hindered amine. Examples of the commercially available product of the triazine skeleton-containing hindered amine include NOR116

(compound of CAS No. 191680-81-6) of FLAMSTAB (registered trademark) manufactured by BASF, NOW XP of HOSTAVIN (registered trademark) manufactured by CLARIANT, and ADK STAB LA-81 (bis(1-undecanoxy-2,2,6,6-tetramethylpiperidine-4-yl)carbonate) manufactured by ADEKA Corporation.

In an embodiment of the present invention, the hindered amine may be a compound represented by the following structural formula (iv):

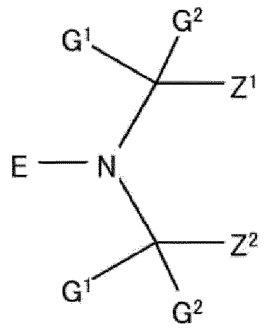

・・・(iv)

where $G^1$ and $G^2$ are independently a $C_{1-8}$ alkyl group or pentamethylene; $Z^1$ and $Z^2$ are each a methyl group, or $Z^1$ and $Z^2$ together form a bond component which may additionally be substituted by an ester group, an ether group, an amide group, an amino group, a carboxy group, or a urethane group; and E is a $C_{1-8}$ alkoxy group, a $C_{5-12}$ cycloalkoxy group, a $C_{7-15}$ aralkoxy group, a -O-C(O)-$C_{1-18}$ alkyl group, or a -O-T-$(OH)_b$ group; where T is (i) a $C_{1-18}$ alkylene chain, (ii) a $C_{5-18}$ cycloalkylene chain, (iii) a $C_{5-18}$ cycloalkenylene chain, or (iv) a $C_{1-4}$ alkylene chain substituted by a phenyl group or by a $C_{1-4}$ alkyl-substituted phenyl group; b is 1 to 3 and does not exceed the number of carbon atoms in T, and when b is 2 or 3, each hydroxyl group is linked to a different carbon atom of T.

The compound represented by the above structural formula (iv) is disclosed in more detail in the specification of European Patent No. 2225318, and, more specifically, disclosed in page 5, line 35 to page 25, line 48 of the specification of European Patent No. 2225318.

In an embodiment of the present invention, the hindered amine may be a compound represented by the following structural formula (v):

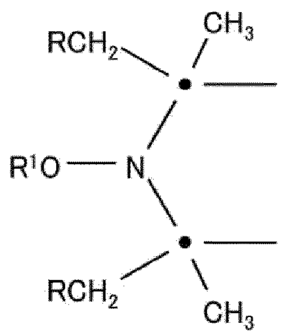

・・・(v)

where R is hydrogen or a methyl group, and $R^1$ is a $C_{1-18}$ alkyl group, a $C_{2-18}$ alkenyl group, a $C_{2-18}$ alkynyl group, a $C_{5-12}$ cycloalkyl group, a $C_{5-8}$ cycloalkenyl group, a $C_{6-10}$ aryl group, or a $C_{7-9}$ aralkyl group.

The compound represented by the above structural formula (v) is disclosed in more detail in page 3, line 33 to page 8, line 58 of the specification of European Patent No. 0309402.

In an embodiment of the present invention, the hindered amine may be a compound represented by the following structural formula (vi):

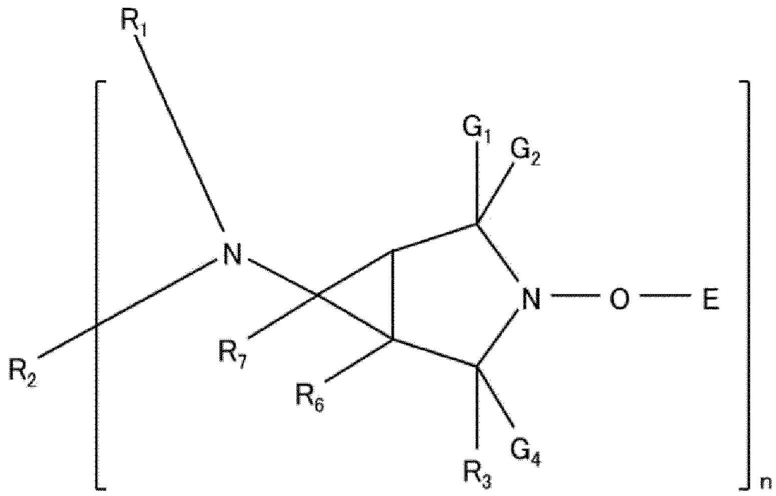

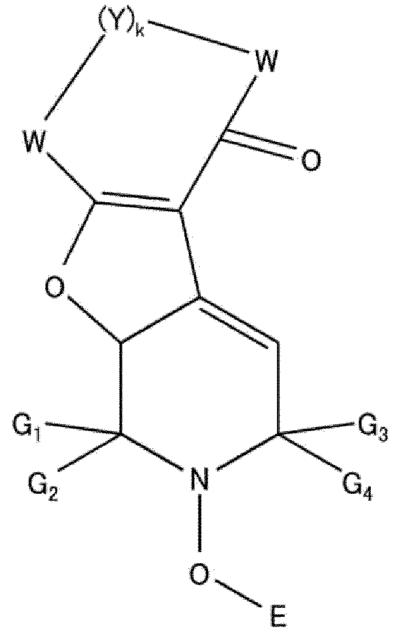

···(vi)

where E, k, Y, W, $R_1$ to $R_7$, and $G_1$ to $G_4$ are as defined in the specification of US Patent No. 8598369.

The compound represented by the above structural formula (vi) is disclosed in more detail in Examples 1 to 12 and Tables 1 to 5 in the specification of US Patent No. 8598369.

The following description will discuss an amount of the flame retarder used in production of the present expanded particles, in other words, an amount of the flame retarder contained in the present expanded particles. The flame retarder is contained in the present expanded particles in an amount of preferably 0.05 parts by weight to 1.00 parts by weight, more preferably 0.05 parts by weight to 0.20 parts by weight, and even more preferably 0.05 parts by weight to 0.10 parts by weight, with respect to 100 parts by weight of the base resin. (i) The flame retarder that is contained in an amount of not less than 0.05 parts by weight makes it possible to sufficiently achieve a flame retardant effect, and (ii) the flame retarder that is contained in an amount of not more than 0.10 parts by weight does not cause any fear that resulting expanded particles may have a non-uniform or minute cell diameter.

<Physical properties>

The following description will discuss physical properties of the present expanded particles.

(DSC ratio of expanded particles)

The present expanded particles preferably have at least two melting peaks in a DSC curve obtained in differential

scanning calorimetry (described later). Among the melting peaks, a melting heat quantity determined from a melting peak on a high temperature-side is regarded as "high temperature-side melting heat quantity", and a melting heat quantity determined from a melting peak on a low temperature-side is regarded as "low temperature-side melting heat quantity". Further, in a case where there are three or more melting peaks, a melting heat quantity determined from a melting peak at the highest temperature is regarded as "high temperature-side melting heat quantity", and a melting heat quantity determined from melting peaks other than the melting peak at the highest temperature is regarded as "low temperature-side melting heat quantity".

The present expanded particles have a DSC ratio that is not particularly limited and that is preferably 10.0% to 50.0%, more preferably 15.0% to 40.0%, and even more preferably 20.0% to 30.0%. The expanded particles that have a DSC ratio of not less than 10.0% have an advantage of making it possible to provide an expanded molded product which has a sufficient strength. In contrast, the expanded particles that have a DSC ratio of not more than 40% have an advantage of making it possible to provide an expanded molded product by molding the expanded particles at a relatively low temperature (molding temperature).

A method for measuring the DSC ratio of the expanded particles will be described in detail in Examples described later.

The DSC ratio of the present expanded particles is also a value serving as an indicator of an amount of crystals contained in the expanded particles and having a high melting point. That is, the DSC ratio which is 10.0% to 50.0% indicates that the expanded particles contain a relatively large amount of crystals having a high melting point. Further, the DSC ratio of the expanded particles is greatly involved in viscoelasticity of resin particles and the expanded particles during expansion of the resin particles and during swelling of the expanded particles. That is, in a case where the expanded particles have a DSC ratio of 10.0% to 50.0%, the resin particles and the expanded particles can exhibit excellent expandability and excellent swellability, respectively, during expansion of the resin particles and during molding of the expanded particles. As a result, the expanded particles have an advantage of making it possible to obtain, with a low molding pressure, an expanded molded product that has excellent internal fusibility and that has excellent mechanical strength such as compressive strength.

Examples of a method for controlling the DSC ratio in a predetermined range in the present expanded particles include a method for adjusting conditions during production of the present expanded particles (in particular, an expansion temperature, an expansion pressure, a maintaining time, a temperature in a region (space) into which a dispersion slurry is released, and the like). The method for controlling the DSC ratio in the predetermined range is preferably a method for adjusting the expansion temperature, the expansion pressure, and/or the maintaining time. This is because the expansion temperature, the expansion pressure, and/or the maintaining time is/are easy to adjust.

For example, a higher expansion temperature tends to result in a lower DSC ratio. On the contrary, a lower expansion temperature tends to result in a higher DSC ratio. This is because the expansion temperature changes an amount of unmelted crystals. Further, a higher expansion pressure tends to result in a lower DSC ratio. On the contrary, a lower expansion pressure tends to result in a higher DSC ratio. This is because the expansion pressure changes a degree of plasticization, and such a change in degree of plasticization changes the amount of the unmelted crystals. Furthermore, a longer maintaining time tends to result in a higher DSC ratio. This is because the maintaining time changes an amount of growth of the unmelted crystals.

(Expansion rate of expanded particles)

The present expanded particles have an expansion rate of preferably 10 times to 50 times, more preferably 15 times to 40 times, and even more preferably 15 times to 30 times. (i) The expanded particles that have an expansion rate of not less than 10 times make it possible to obtain a light-weight expanded molded product with high production efficiency, and (ii) the expanded particles that have an expansion rate of not more than 50 times cause no fear that a resulting expanded molded product may have an insufficient strength.

A method for calculating the expansion rate of the expanded particles will be described in detail in Examples described later.

(Average cell diameter of expanded particles)

The present expanded particles have an average cell diameter that is not particularly limited and that is preferably 100 μm to 500 μm, more preferably 120 μm to 400 μm, even more preferably 120 μm to 300 μm, and still more preferably 140 μm to 250 μm. (i) The present expanded particles that have an average cell diameter of not less than 100 μm make it possible to provide a polypropylene-based resin expanded molded product which has no color unevenness and which has excellent colorability and an excellent compressive strength, and (ii) the present expanded particles that have an average cell diameter of not more than 500 μm have an advantage of having good productivity without any fear of a longer molding cycle for an in-mold expanded molded product. Note here that the molding cycle is intended to mean a time from a start of

in-mold expansion molding to an end of molding, at which end a resulting molded product is released from a mold, in a case where an expanded molded product is obtained by using expanded particles to carry out in-mold expansion molding.

A method for measuring the average cell diameter of the expanded particles will be described in detail in Examples described later.

<Method for producing polypropylene-based resin expanded particles>

A method for producing polypropylene-based resin expanded particles in accordance with an embodiment of the present invention includes: a granulation step of melting and kneading a mixture so as to obtain polypropylene-based resin particles, the mixture containing a non-recycled polypropylene-based resin, a recycled material, and carbon black A having an average structure size of not less than $0.2\times10^4$ $nm^2$ and less than $4.0\times10^4$ $nm^2$; a dispersion step of dispersing the polypropylene-based resin particles, an aqueous dispersion medium, and a blowing agent in a vessel; a heating step of increasing a temperature in the vessel to a temperature that is not less than a softening temperature of the polypropylene-based resin particles; a pressurization step of raising an internal pressure of the vessel; and a releasing step of releasing one end of the vessel so as to release a dispersion slurry inside the vessel into a region having a pressure lower than the internal pressure of the vessel. In the method for producing polypropylene-based resin expanded particles in accordance with an embodiment of the present invention, the recycled material contains (i) a recycled polypropylene-based resin and/or a recycled polyethylene-based resin and (ii) carbon black B having an average structure size of not less than $5.0\times10^4$ $nm^2$ and less than $9.0\times10^4$ $nm^2$, and the recycled material is used in an amount such that a total content of the recycled polypropylene-based resin and the recycled polyethylene-based resin is 10 parts by weight to 60 parts by weight in 100 parts by weight of the base resin containing the non-recycled polypropylene-based resin and the recycled polypropylene-based resin and/or the recycled polyethylene-based resin.

A method for producing the present expanded particles has the foregoing feature, and thus has an advantage of making it possible to provide polypropylene-based resin expanded particles from which a polypropylene-based resin expanded molded product has excellent blackness and excellent flame retardancy can be provided. Further, in the method for producing the present expanded particles, the recycled polypropylene-based resin and/or the recycled polyethylene-based resin is/are used as described earlier. Thus, it can be said that the method for producing the present expanded particles imposes a low environmental load.

A recycled material (in particular, a recycled material containing a recycled polypropylene-based resin) currently distributed in a market can contain carbon black. This is because carbon black is added as a coloring agent in a product which has not been recycled and/or because carbon black is added in a recycling step in order that a color(s) of appearance of a recycled material and/or the product which has not been recycled is/are shaded with carbon black so as to allow the recycled material to have a beautiful color. Note that, as a result of measurement of an average structure size of carbon black by the above-described method by the inventor of the present invention, the carbon black being contained in a recycled polypropylene-based resin, which is an example of a recycled material, the average structure size was, for example, not less than $5.0\times10^4$ $nm^2$ and less than $9.0\times10^4$ $nm^2$. In the present specification, carbon black having an average structure size of not less than $5.0\times10^4$ $nm^2$ and less than $9.0\times10^4$ $nm^2$ is regarded as "carbon black B". In other words, the recycled material can contain the carbon black B.

Further, the inventor of the present invention obtained knowledge that an expanded molded product obtained by molding expanded particles obtained with use of a recycled material (for example, a recycled polypropylene-based resin and/or a recycled polyethylene-based resin) is inferior in blackness. Then, diligent research was carried out in order to provide an expanded molded product that has excellent blackness even in a case where expanded particles obtained with use of a recycled material are used.

In the course of diligent research, the inventor of the present invention uniquely obtained new knowledge that expanded particles obtained by further addition (use) of carbon black having a smaller average structure size (for example, not less than $0.2\times10^4$ $nm^2$ and less than $4.0\times10^4$ $nm^2$) than carbon black contained in a recycled material surprisingly make it possible to provide an expanded molded product which has excellent blackness. In the present specification, carbon black having an average structure size of not less than $0.2\times10^4$ $nm^2$ and less than $4.0\times10^4$ $nm^2$ is regarded as "carbon black A". In other words, the inventor of the present invention uniquely obtained new knowledge that expanded particles obtained by using (adding) the carbon black A in addition to the recycled material make it possible to provide an expanded molded product which has excellent blackness.

The inventor of the present invention used the expanded particles obtained by using (adding) the carbon black A in addition to the recycled material to measure the average structure size of the carbon black in the expanded particles by the above-described method. As a result, at least some of the expanded particles had a ratio of the number of carbon black pieces having a structure size per one structure of less than $1\times10^4$ $nm^2$ to a total number of pieces of the carbon black in the expanded particles of 10% to 50%. That is, the present production method makes it possible to provide expanded particles in accordance with an embodiment of the present invention. Note that the carbon black which is contained in the expanded particles and which has a structure size per one structure of less than $1\times10^4$ $nm^2$ can be derived from the carbon black B in

the recycled material, and can be derived from the carbon black A which has been additionally used (added).

Further, the inventor of the present invention uniquely obtained new knowledge that, in a case where an average structure size of carbon black additionally used in addition to a recycled material and an amount of the carbon black are adjusted as appropriate so as to achieve expanded particles such that a ratio of the number of carbon black pieces having a structure size per one structure of less than $1 \times 10^4$ $nm^2$ to a total number of pieces of carbon black in expanded particles is 10% to 50%, it is possible to provide polypropylene-based resin expanded particles from which a polypropylene-based resin expanded molded product that contains a recycled resin and that has excellent blackness and excellent flame retardancy can be provided.

The following description will discuss, in detail, an aspect of the method for producing the present expanded particles. For matters other than those detailed below, the disclosures in the foregoing [2. Polypropylene-based resin expanded particles] section apply as appropriate. The method for producing the present expanded particles is not limited to the following production method.

(Granulation step)

The granulation step can be said to be a step of preparing polypropylene-based resin particles containing: (a) a base resin containing (i) a non-recycled polypropylene-based resin and (ii) a recycled polypropylene-based resin and/or a recycled polyethylene-based resin; and (b) carbon black. In the present production method (e.g., the granulation step), a recycled material is used in an amount such that a total content of the recycled polypropylene-based resin and the recycled polyethylene-based resin in resulting polypropylene-based resin particles is 10 parts by weight to 60 parts by weight in 100 parts by weight of the base resin contained in the resulting polypropylene-based resin particles. In the present specification, "polypropylene-based resin particles" may be referred to as "resin particles".

The polypropylene-based resin particles in the present production method contain the base resin. It can be said that the polypropylene-based resin particles obtained through the granulation step contain the base resin.

In the granulation step, it is preferable to further use an expansion nucleating agent. In other words, the polypropylene-based resin particles in the present production method preferably contain the expansion nucleating agent. Specific examples of the expansion nucleating agent are identical to those described in the foregoing (Expansion nucleating agent) section, and thus the descriptions in that section apply, and a description of the specific examples is omitted here. The expansion nucleating agent is used in the present production method (e.g., the granulation step) preferably in an amount such that the expansion nucleating agent is contained in resulting polypropylene-based resin particles in an amount described in the foregoing (Expansion nucleating agent) section, with respect to 100 parts by weight of the base resin in the resulting polypropylene-based resin particles.

In melting and kneading a mixture, for example, an extruder, which is not particularly limited, is used. In the granulation step, an aspect other than melting and kneading the mixture is not particularly limited. For example, for the mixture that has been melted and kneaded, polypropylene-based resin particles can be prepared by carrying out, in order, the following (1) to (3): (1) the mixture is extruded from a die provided in the extruder; (2) the extruded mixture is cooled by, for example, passing the mixture through water, so as to solidify the mixture; (3) subsequently, a cutter is used to finely cut the solidified mixture into a desired shape such as a cylindrical shape, an elliptical shape, a spherical shape, a cuboid shape, a rectangular parallelepiped shape, a hollow tubular shape, or a polygonal column shape. Alternatively, the mixture that has been melted and kneaded may be extruded directly into water from the die provided in the extruder, and, immediately after the extrusion, the mixture may be cut into particles, cooled, and solidified.

In the granulation step, a mixture containing the non-recycled polypropylene-based resin, the recycled material, and the carbon black A is melted and kneaded. The carbon black A may be used as it is or in a state of a master batch in which the carbon black A is kneaded with a polypropylene-based resin in advance. In the granulation step, the carbon black B and the carbon black C may be further used in addition to the carbon black A. Respective amounts of the carbon black A, the carbon black B, and the carbon black C that are used in the granulation step can be respective contents of the carbon black A, the carbon black B, and the carbon black C in resulting expanded particles. Thus, the carbon black A, the carbon black B, and the carbon black C are used in the present production method (e.g., the granulation step) preferably in respective amounts such that the carbon black A, the carbon black B, and the carbon black C are contained in resulting polypropylene-based resin particles in respective amounts described in the foregoing (2-2. Carbon black) section, with respect to 100 parts by weight of the base resin in the resulting polypropylene-based resin particles. Further, respective average structures of the carbon black A, the carbon black B, and the carbon black C that are used in the granulation step are identical to the descriptions of the foregoing average structures of the carbon black A, the carbon black B, and the carbon black C, and thus the descriptions apply, and a description of the respective average structures of the carbon black A, the carbon black B, and the carbon black C that are used in the granulation step is omitted here. The amount of the carbon black B used in the present production method (e.g., the granulation step) is intended to mean a sum of an amount of the carbon black B that is contained in the recycled material used and an amount of the carbon black B that is not used as the recycled material and that is separately optionally used.

In the present production method (e.g., the granulation step), the non-recycled polypropylene-based resin and the recycled material are preferably used in a total amount such that a total content of the non-recycled polypropylene-based resin, the recycled polypropylene-based resin, and the recycled polyethylene-based resin in the polypropylene-based resin particles is the amount described in the foregoing (2-1. Base resin) section.

(Dispersion step)

It can be said that the dispersion step is, for example, a step of preparing a dispersion slurry in which resin particles and a blowing agent and, as necessary, a dispersing agent and/or a dispersion auxiliary agent are dispersed in an aqueous dispersion medium.
A vessel used in the dispersion step is not limited to any particular one, and is preferably a vessel which can withstand the expansion temperature described later and the expansion pressure described later.
Examples of the vessel include a pressure-resistant vessel and an autoclave-type pressure-resistant vessel. The vessel may also be provided with a stirrer therein.
The aqueous dispersion medium is not limited to any particular one, provided that the aqueous dispersion medium allows the resin particles, the blowing agent, and the like to be uniformly dispersed.
Examples of the aqueous dispersion medium include (a) dispersion media obtained by adding methanol, ethanol, ethylene glycol, glycerin, and the like to water, (b) water such as tap water and industrial water, and (c) a solution (aqueous solution) containing a salt such as sodium chloride or sodium sulfate. Preferable examples of the aqueous dispersion medium include: pure water such as RO water (water purified by a reverse osmosis membrane method), distilled water, and deionized water (water purified by an ion exchange resin); and ultrapure water. This is because such aqueous dispersion media make it possible to stably produce expanded particles.
Examples of the blowing agent include (a) inorganic blowing agents such as (a-1) inorganic gas such as nitrogen, carbon dioxide, air (a mixture of oxygen, nitrogen, and carbon dioxide) and (a-2) water and (b) organic blowing agents such as (b-1) saturated hydrocarbons having 3 to 5 carbon atoms, such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, chloroethane, and hydrofluoroolefin.
As the blowing agent, halogenated hydrocarbons such as dichloromethane and dichlorodifluoroethane can also be used.
In the method for producing the present expanded particles, it is preferable to use the dispersing agent (e.g., inorganic substances such as tricalcium phosphate and kaolin) and the dispersion auxiliary agent (e.g., an anionic surfactant such as sodium dodecylbenzene sulfonate). The above feature makes it possible to reduce agglomeration (which may hereinafter be referred to as blocking) of resin particles, and to improve stability of the dispersion slurry in the vessel. This brings about an advantage of making it possible to stably produce expanded particles.
One type of the above-listed aqueous dispersion media may be used alone, or two or more types thereof may be used in combination, and one type of the above-listed blowing agents may be used alone, or two or more types thereof may be used in combination.
The present production method includes, between the dispersion step and the releasing step, a heating step of increasing a temperature in the vessel to a temperature that is not less than a softening temperature of the polypropylene-based resin particles, and a pressurization step of raising an internal pressure of the vessel to, for example, a certain pressure. The heating step and the pressurization step may be carried out in random order or may be carried out simultaneously. Furthermore, the present production method may further include, after the heating step and the pressurization step, a maintaining step of maintaining the temperature in the vessel at a temperature that is not less than the softening temperature of the polypropylene-based resin particles, and maintaining the internal pressure of the vessel at the certain pressure.

(Heating step, pressurization step, and maintaining step)

In the present specification, (a) the "temperature that is not less than the softening temperature of the polypropylene-based resin particles" in the heating step, the pressurization step, and the maintaining step may be referred to as "expansion temperature", and (b) the certain pressure in the heating step, the pressurization step, and the maintaining step may be referred to as "expansion pressure". In the present specification, "a temperature that is not less than the softening temperature of the polypropylene-based resin particles" means a temperature that is not less than 10°C below a melting point of polypropylene-based resin constituting the polypropylene-based resin particles, and means, in a case where two or more types of polypropylene-based resins are used, a temperature that is not less than 10°C below a melting point of a polypropylene-based resin having the highest melting point.
The expansion temperature in the heating step varies depending on, for example, types of the non-recycled polypropylene-based resin and the recycled material, a type of the blowing agent, and/or an apparent density of desired

expanded particles, and thus cannot be generally defined. In the heating step, it is not particularly limited to what temperature the temperature in the vessel is raised, provided that the temperature in the vessel is increased to a temperature that is not less than the softening temperature of the polypropylene-based resin particles. The heating step of an embodiment of the present invention is (i) preferably a step of increasing the temperature in the vessel to a temperature that is not less than the softening temperature of the polypropylene-based resin particles and that is not more than the softening temperature of the polypropylene-based resin particles + 10.0°C, (ii) more preferably a step of increasing the temperature in the vessel to a temperature that is not less than the softening temperature of the polypropylene-based resin particles and that is not more than the softening temperature of the polypropylene-based resin particles + 8.0°C, and (iii) even more preferably a step of increasing the temperature in the vessel to a temperature that is not less than the softening temperature of the polypropylene-based resin particles and that is not more than the softening temperature of the polypropylene-based resin particles + 6.0°C. The above feature is advantageous in that there is no fear that the polypropylene-based resin particles may adhere to each other in the vessel.

In the pressurization step, it is not particularly limited to what degree of pressure the internal pressure of the vessel is raised. The pressurization step of an embodiment of the present invention is (i) preferably a step of raising the internal pressure of the vessel to a pressure of 1.0 MPa (gage pressure) to 10.0 MPa (gage pressure), (ii) more preferably a step of raising the internal pressure of the vessel to a pressure of 1.5 MPa (gage pressure) to 5.0 MPa (gage pressure), and (iii) more preferably a step of raising the internal pressure of the vessel to a pressure of 1.5 MPa (gage pressure) to 3.5 MPa (gage pressure). In a case where the pressurization step is a step of raising the internal pressure of the vessel to a pressure of not less than 1.0 MPa (gage pressure), it is possible to obtain expanded particles having a suitable density.

In the maintaining step, a period of time (maintaining time) for which the temperature in the vessel (the temperature of the dispersion slurry) is maintained at around the expansion temperature, and the internal pressure of the vessel is maintained at around the expansion pressure is not particularly limited. The maintaining time is preferably 10 minutes to 60 minutes, more preferably 12 minutes to 55 minutes, and even more preferably 15 minutes to 50 minutes. In a case where the maintaining time is not less than 10 minutes, there is a sufficient amount of unmelted crystals (crystals of the base resin). This brings about an advantage of making it possible to reduce shrinkage of resulting expanded particles and/or an increase in open cell ratio of the resulting expanded particles. In contrast, in a case where the maintaining time is not more than 60 minutes, there is no excessive amount of unmelted crystals. This brings about an advantage of making it possible to mold expanded particles at a low molding temperature.

(Releasing step)

(a) In a case where the maintaining step is not carried out, the releasing step can be carried out after the heating step and the pressurization step. (b) In a case where the maintaining step is carried out, the releasing step can be carried out after the maintaining step. The releasing step makes it possible to expand resin particles, and as a result, expanded particles are obtained.

In the releasing step, a "region having a pressure lower than the internal pressure of the vessel" is intended to mean a "region under a pressure lower than the internal pressure of the vessel" or a "space under a pressure lower than the internal pressure of the vessel", and can also be described as "in an atmosphere having a pressure lower than the internal pressure of the vessel". The region having a pressure lower than the internal pressure of the vessel can also be described as a region having a pressure lower than the expansion pressure, and may be, for example, a region under atmospheric pressure.

In a case where, in the releasing step, the dispersion slurry is released into a region having a pressure lower than the internal pressure of the vessel, it is also possible to release the dispersion slurry through an open orifice measuring 1 mm to 5 mm in diameter for the purpose of, for example, adjusting a flow rate of the dispersion slurry and reducing variation in expansion rate of resulting expanded particles.

A low-pressure region is, for example, a gas phase. The above low-pressure region (space) may be filled with saturated steam for the purpose of improving expandability.

A process for producing expanded particles from resin particles as described above will be referred to as a "first-step expansion process," and the expanded particles thus obtained will be referred to as "first-step expanded particles".

(Second-step expansion process)

In order to obtain expanded particles having a high expansion rate, the first-step expanded particles obtained in the first-step expansion process may be expanded again. A process for increasing an expansion rate of the first-step expanded particles is referred to as a "second-step expansion process", and polyolefin-based resin expanded particles obtained through the second-step expansion process are referred to as "second-step expanded particles". A specific method of the second-step expansion process is not particularly limited, and a known method can be employed.

[3. Polypropylene-based resin expanded molded product]

An embodiment of the present invention also provides a polypropylene-based resin expanded molded product obtained by molding the polypropylene-based resin expanded particles disclosed in the foregoing [2. Polypropylene-based resin expanded particles] section. A polypropylene-based resin expanded molded product in accordance with an embodiment of the present invention can be said to be an expanded molded product containing the polypropylene-based resin expanded particles disclosed in the [2. Polypropylene-based resin expanded particles] section.

In the present specification, the "polypropylene-based resin expanded molded product in accordance with an embodiment of the present invention" may be referred to as the "present expanded molded product".

The present expanded molded product has the above-described feature, and thus has an advantage of having excellent blackness and excellent flame retardancy (self-extinguishing property). Specifically, it is possible to obtain an expanded molded product in which an L value as measured by a spectroscopic colorimeter is less than 28, i.e., which has excellent blackness. The present expanded molded product further has an advantage of having reduced color unevenness and having an excellent surface property. Specifically, it is possible to obtain an expanded molded product in which a standard deviation of the L value as measured by the spectroscopic colorimeter is less than 2, i.e., in which color unevenness is prevented or reduced. A method for measuring and evaluating blackness, color unevenness, flame retardancy, and a surface property of the expanded molded product will be described in detail in Examples below.

The present expanded molded product has a density that is not particularly limited. The density is preferably 20 g/L to 90 g/L, and more preferably 20 g/L to 60 g/L. The above feature is advantageous in that it is possible to achieve both an excellent lightweight property and excellent impact resistance of a molded product. A method for measuring the density of the expanded molded product will be described in detail in Examples below.

<Method for producing expanded molded product>

A method for producing the present expanded molded product is not limited to any other particular aspects, and a known method can be applied, provided that the present expanded particles can be molded (preferably subjected to in-mold expansion molding) so as to obtain an expanded molded product. As the method for producing the present expanded molded product, it is possible to suitably employ, for example, a production method disclosed in the <Method for producing expanded molded product> section of the International Publication WO2022/149538.

An embodiment of the present invention may be configured as below.

<1> Polypropylene-based resin expanded particles containing a base resin and carbon black, the base resin containing (i) a non-recycled polypropylene-based resin and (ii) a recycled polypropylene-based resin and/or a recycled polyethylene-based resin, a total content of the recycled polypropylene-based resin and the recycled polyethylene-based resin being 10 parts by weight to 60 parts by weight in 100 parts by weight of the base resin, and a ratio of the number of carbon black pieces having a structure size per one structure of less than $1\times10^4$ nm$^2$ to a total number of pieces of the carbon black being 10% to 50%.

<2> The polypropylene-based resin expanded particles described in <1>, wherein the polypropylene-based resin expanded particles contain carbon black A having an average structure size of not less than $0.2\times10^4$ nm$^2$ and less than $4.0\times10^4$ nm$^2$, and carbon black B having an average structure size of not less than $5.0\times10^4$ nm$^2$ and less than $9.0\times10^4$ nm$^2$.

<3> The polypropylene-based resin expanded particles described in <1> or <2>, further containing an expansion nucleating agent.

<4> The polypropylene-based resin expanded particles described in <3>, wherein the expansion nucleating agent is contained in an amount of 0.05 parts by weight to 0.50 parts by weight with respect to 100 parts by weight of the base resin.

<5> The polypropylene-based resin expanded particles described in <3>, wherein the expansion nucleating agent is contained in an amount of 0.20 parts by weight to 0.50 parts by weight with respect to 100 parts by weight of the base resin.

<6> The polypropylene-based resin expanded particles described in any one of <3> to <5>, wherein the expansion nucleating agent is talc.

<7> The polypropylene-based resin expanded particles described in any one of <1> to <6>, further containing a hindered amine-based flame retarder.

<8> The polypropylene-based resin expanded particles described in <2>, wherein the carbon black A is contained in an amount of 0.1 parts by weight to 5.0 parts by weight with respect to 100 parts by weight of the base resin.

<9> The polypropylene-based resin expanded particles described in <2>, wherein the carbon black B is contained in an amount of 0.10 parts by weight to 2.00 parts by weight with respect to 100 parts by weight of the base resin.

<10> The polypropylene-based resin expanded particles described in any one of <1> to <9>, wherein the base resin contains the recycled polyethylene-based resin, and the recycled polyethylene-based resin contains a recycled high-density polyethylene-based resin.

<11> The polypropylene-based resin expanded particles described in any one of <1> to <10>, wherein the recycled polypropylene-based resin is contained in an amount of 60 parts by weight to 100 parts by weight, and the recycled polyethylene-based resin is contained in an amount of 0 part by weight to 40 parts by weight, where the total content of the recycled polypropylene-based resin and the recycled polyethylene-based resin is 100 parts by weight.

<12> The polypropylene-based resin expanded particles described in any one of <1> to <11>, wherein the polypropylene-based resin expanded particles contain no carbon black C having an average structure size of not less than $10.0 \times 10^4$ $nm^2$, or contain the carbon black C in an amount of less than 0.5 parts by weight with respect to 100 parts by weight of the base resin.

<13> The polypropylene-based resin expanded particles described in any one of <1> to <12>, wherein the non-recycled polypropylene-based resin contains, in 100% by weight of the non-recycled polypropylene-based resin, not less than 60% by weight of at least one selected from the group consisting of an ethylene/propylene alternating copolymer, an ethylene/1-butene/propylene alternating copolymer, an ethylene/propylene random copolymer, and an ethylene/1-butene/propylene random copolymer.

<14> The polypropylene-based resin expanded particles described in any one of <1> to <13>, wherein the base resin contains the recycled polypropylene-based resin, and the recycled polypropylene-based resin contains at least one selected from the group consisting of an ethylene/propylene alternating copolymer, an ethylene/1-butene/propylene alternating copolymer, an ethylene/propylene random copolymer, and an ethylene/propylene random copolymer.

<15> The polypropylene-based resin expanded particles described in any one of <1> to <14>, wherein the base resin contains the non-recycled polypropylene-based resin, the recycled polypropylene-based resin, and the recycled polyethylene-based resin in a total amount of 80 parts by weight to 100 parts by weight in 100 parts by weight of the base resin.

<16> The polypropylene-based resin expanded particles described in any one of <1> to <15>, wherein the polypropylene-based resin expanded particles have a DSC ratio of 10.0% to 50.0%.

<17> The polypropylene-based resin expanded particles described in any one of <1> to <16>, wherein the polypropylene-based resin expanded particles have an expansion rate of 10 times to 50 times.

<18> The polypropylene-based resin expanded particles described in any one of <1> to <17>, wherein the polypropylene-based resin expanded particles have an average cell diameter of 100 μm to 500 μm.

<19> A polypropylene-based resin expanded molded product obtained by molding polypropylene-based resin expanded particles described in any one of <1> to <18>.

<20> The polypropylene-based resin expanded molded product described in <19>, wherein the polypropylene-based resin expanded molded product has a density of 20 g/L to 90 g/L.

<21> The polypropylene-based resin expanded molded product described in <19> or <20>, wherein the polypropylene-based resin expanded molded product has a self-extinguishing property.

<22> The polypropylene-based resin expanded molded product described in any one of <19> to <21>, wherein an L value of the polypropylene-based resin expanded molded product as measured by a spectroscopic colorimeter is less than 28.

<23> The polypropylene-based resin expanded molded product described in any one of <19> to <22>, wherein an L value of the polypropylene-based resin expanded molded product as measured by a spectroscopic colorimeter has a standard deviation of less than 2.

<24> A method for producing polypropylene-based resin expanded particles, including: a granulation step of melting and kneading a mixture so as to obtain polypropylene-based resin particles, the mixture containing a non-recycled polypropylene-based resin, a recycled material, and carbon black A having an average structure size of not less than $0.2 \times 10^4$ $nm^2$ and less than $4.0 \times 10^4$ $nm^2$; a dispersion step of dispersing the polypropylene-based resin particles, an aqueous dispersion medium, and a blowing agent in a vessel; a heating step of increasing a temperature in the vessel to a temperature that is not less than a softening temperature of the polypropylene-based resin particles; a pressurization step of raising an internal pressure of the vessel; and a releasing step of releasing one end of the vessel so as to release a dispersion slurry inside the vessel into a region having a pressure lower than the internal pressure of the vessel,

the recycled material containing (i) a recycled polypropylene-based resin and/or a recycled polyethylene-based resin and (ii) carbon black B having an average structure size of not less than $5.0 \times 10^4$ $nm^2$ and less than $9.0 \times 10^4$ $nm^2$, and the recycled material being used in an amount such that a total content of the recycled polypropylene-based resin and the recycled polyethylene-based resin is 10 parts by weight to 60 parts by weight in 100 parts by weight of the base resin containing the non-recycled polypropylene-based resin and the recycled polypropylene-based resin and/or the recycled polyethylene-based resin.

<25> The method described in <24>, wherein the heating step is a step of increasing the temperature in the vessel to a

temperature that is not less than the softening temperature of the polypropylene-based resin particles and that is not more than the softening temperature of the polypropylene-based resin particles + 10.0°C.

<26> The method described in <24> or <25>, wherein the pressurization step is a step of raising the internal pressure of the vessel to a pressure of 1.0 MPa (gage pressure) to 10.0 MPa (gage pressure).

<27> The method described in any one of <24> to <26>, wherein the polypropylene-based resin particles further contain an expansion nucleating agent.

<28> The method described in <27>, wherein the polypropylene-based resin particles contain the expansion nucleating agent in an amount of 0.05 parts by weight to 0.50 parts by weight with respect to 100 parts by weight of the base resin.

<29> The method described in <27>, wherein the polypropylene-based resin particles contain the expansion nucleating agent in an amount of 0.20 parts by weight to 0.50 parts by weight with respect to 100 parts by weight of the base resin.

<30> The method described in any one of <27> to <29>, wherein the expansion nucleating agent is talc.

<31> The method described in any one of <24> to <30>, wherein the polypropylene-based resin particles further contain a hindered amine-based flame retarder.

<32> The method described in any one of <24> to <31>, wherein the carbon black A is used in an amount such that the carbon black A is contained in an amount of 0.1 parts by weight to 5.0 parts by weight with respect to 100 parts by weight of the base resin.

<33> The method described in any one of <24> to <32>, wherein the carbon black B is used in an amount such that the carbon black B is contained in an amount of 0.10 parts by weight to 2.00 parts by weight with respect to 100 parts by weight of the base resin.

<34> The method described in any one of <24> to <33>, wherein the recycled material contains the recycled polyethylene-based resin, and the recycled polyethylene-based resin contains a recycled high-density polyethylene-based resin.

<35> The method described in any one of <24> to <34>, wherein, in the recycled material, the recycled polypropylene-based resin is contained in an amount of 60 parts by weight to 100 parts by weight, and the recycled polyethylene-based resin is contained in an amount of 0 part by weight to 40 parts by weight, where the total content of the recycled polypropylene-based resin and the recycled polyethylene-based resin is 100 parts by weight.

<36> The method described in any one of <24> to <35>, wherein no carbon black C having an average structure size of not less than $10.0\times10^4$ $nm^2$ is used, or the carbon black C is used in an amount such that the carbon black C is contained in an amount of less than 0.5 parts by weight with respect to 100 parts by weight of the base resin.

<37> The method described in any one of <24> to <36>, wherein the non-recycled polypropylene-based resin contains, in 100% by weight of the non-recycled polypropylene-based resin, not less than 60% by weight of at least one selected from the group consisting of an ethylene/propylene alternating copolymer, an ethylene 1-butene/propylene alternating copolymer, an ethylene/propylene random copolymer, and an ethylene/1-butene/propylene random copolymer.

<38> The method described in any one of <24> to <37>, wherein the recycled material contains the recycled polypropylene-based resin, and the recycled polypropylene-based resin contains at least one selected from the group consisting of an ethylene/propylene alternating copolymer, an ethylene/1-butene/propylene alternating copolymer, an ethylene/propylene random copolymer, and an ethylene/propylene random copolymer.

<39> The method described in any one of <24> to <38>, wherein the non-recycled polypropylene-based resin and the recycled material are used in a total amount such that a total content of the non-recycled polypropylene-based resin, the recycled polypropylene-based resin, and the recycled polyethylene-based resin in the polypropylene-based resin particles is 80 parts by weight to 100 parts by weight in 100 parts by weight of the base resin in the polypropylene-based resin particles.

<40> The method described in any one of <24> to <39>, wherein the polypropylene-based resin expanded particles have a DSC ratio of 10.0% to 50.0%.

<41> The method described in any one of <24> to <40>, wherein the polypropylene-based resin expanded particles have an expansion rate of 10 times to 50 times.

<42> The method described in any one of <24> to <41>, wherein the polypropylene-based resin expanded particles have an average cell diameter of 100 μm to 500 μm.

<43> A method for producing a polypropylene-based resin expanded molded product, including a step of molding polypropylene-based resin expanded particles described in any one of <1> to <18> or polypropylene-based resin expanded particles obtained by a method for producing polypropylene-based resin expanded particles described in any one of <24> to <42>.

<44> The method described in <43>, wherein the polypropylene-based resin expanded molded product has a density of 20 g/L to 90 g/L.

<45> The method described in <43> or <44>, wherein the polypropylene-based resin expanded molded product has a

self-extinguishing property.
<46> The method described in any one of <43> to <45>, wherein an L value of the polypropylene-based resin expanded molded product as measured by a spectroscopic colorimeter is less than 28.
<47> The method described in any one of <43> to <46>, wherein an L value of the polypropylene-based resin expanded molded product as measured by a spectroscopic colorimeter has a standard deviation of less than 2.

Examples

The following description will further specifically discuss an embodiment of the present invention with reference to Examples and Comparative Examples. However, the present invention is not limited only to such Examples. In Examples and Comparative Examples, substances used are as listed below, and were used without carrying out, in particular, purification, etc.

< Materials>

(Non-recycled polypropylene-based resin)

· Ethylene/ 1-butene/propylene random copolymer [having an ethylene content of 1.0% by weight, a 1-butene content of 4 parts by weight, and a melting point of 148°C]

(Recycled material)

· Recycled material 1; a mixture containing 96.2 parts by weight of the ethylene/propylene random copolymer [having an ethylene content of 9.0% by weight and a melting point of 151°C], 3 parts by weight of carbon black B, and 0.8 parts by weight of talc
An average structure size of the carbon black B in the recycled material 1 was $5.8\times10^4$ $nm^2$ as measured by the following method. Further, a carbon black B content of the recycled material 1 is a value obtained by measurement by the following method. An ash content of the recycled material 1 was 0.8 parts by weight as measured by the following method. Furthermore, resulting ash was qualitatively analyzed by the following method and found to be talc.
· Recycled material 2; high-density polyethylene [having a melting point of 126°C]

(Carbon black)

· Carbon black A [average structure size: $3.2\times10^4$ $nm^2$ (minimum value of structure: $0.01\times10^4$ $nm^2$, maximum value of structure: $5.0\times10^4$ $nm^2$)]
· Carbon black B (carbon black contained in the recycled material 1) [average structure size: $5.8\times10^4$ $nm^2$ (minimum value of structure: $1.0\times10^4$ $nm^2$, maximum value of structure: $9.9\times10^4$ $nm^2$)]

(Expansion nucleating agent)

· Talc [Talcan Powder PK-S manufactured by Hayashi-Kasei Co., Ltd.]

(Water absorbing substance)

· Glycerin [PURIFIED GLYCERIN D manufactured by Lion Corporation]

(Flame retarder)

· Hindered amine-based flame retarder [NOR116 manufactured by BASF]

<Method for measuring melting point>

Melting points of a non-recycled polypropylene-based resin, a recycled polypropylene-based resin, and a recycled polyethylene-based resin were values measured and determined by a DSC method using a differential scanning calorimeter (DSC7020 manufactured by Hitachi High-Tech Science Corporation). A specific operational procedure was as described in the following (1) to (3): (1) a temperature of 5 mg to 6 mg of a sample (the non-recycled polypropylene-based resin, the recycled polypropylene-based resin, or the recycled polyethylene-based resin) was increased from 40°C to 220°C at a temperature increase rate of 10°C/min so that the sample was melted; (2) thereafter, the temperature of the melted sample was decreased from 220°C to 40°C at a temperature decrease rate of 10°C/min so that the sample was crystallized; and (3) then, the temperature of the crystallized sample was further increased from 40°C to 220°C at a temperature increase rate of 10°C/min. The temperature at a peak (melting peak) in a DSC curve of the sample which DSC curve was obtained in the second temperature increase (i.e., in (3)) was regarded as the melting point of the sample.

<Measurement of structure size of carbon black>

A structure size of carbon black in expanded particles was determined by the following measurement method: (1) a microtome was used to cut polypropylene-based resin expanded particles into approximately half; (2) a cross section of a cell membrane of the polypropylene-based resin expanded particles thus obtained was magnified 40,000 times with a transmission electron microscope, and a picture of the cross section thus magnified was taken and obtained; and (3) in the picture of the cross section thus obtained with use of the transmission electron microscope, structures of 30 carbon black pieces were arbitrarily extracted, and areas of those carbon black pieces were measured. Specifically, a line was drawn along a contour of a carbon black structure, and an area measurement function of PDF file editing software [Adobe Acrobat DC manufactured by Adobe Inc.] was used to measure an area of a part enclosed by the line.

A structure size of the carbon black in the recycled material was measured by a method identical to the above-described method, except that, in (3) above, an image obtained by magnifying the recycled material 40,000 times with a transmission electron microscope, and taking a picture of the recycled material thus magnified was used. Further, a structure size of the carbon black A or B separately added (used) was measured by a method identical to the above-described method, except that, in (3) above, an image obtained by magnifying the carbon black A or B 40,000 times with a transmission electron microscope, and taking a picture of the carbon black A or B thus magnified was used.

<Measurement of carbon black content in recycled material>

Simultaneous Thermogravimetry/ Differential Thermal Analysis [STA200RV manufactured by Hitachi High-Tech Science Corporation] was used to measure a carbon black content in the recycled material. A specific operational procedure was as described in the following (1) to (3): (1) into a measuring vessel made of Pt, 6 mg to 8 mg of the recycled material was measured out; (2) after a temperature of a sample was increased to 600°C at 10°C/min under a nitrogen atmosphere, the sample was cooled to 400°C at 10°C/min, and thereafter the nitrogen atmosphere was replaced with a pseudo-air (mixed gas consisting of 21% oxygen and 79% nitrogen) atmosphere, and then the temperature was increased to 800°C at 10°C/min; and (3) in a TG weight loss rate curve obtained in the foregoing process (2), a weight ratio [weight%] of the carbon black was calculated from a difference between a weight loss rate [weight%] at 400°C and a weight loss rate [weight%] at 800°C in a step of increasing the temperature from 400°C to 800°C.

<Measurement of ash content in recycled material>

The ash content in the recycled material was determined from a weight of the recycled material and a weight of the recycled material that had been burned. A specific operational procedure was as described in the following (1) to (4): (1) the recycled material was heated at 150°C for 1 hour, and moisture was completely removed; (2) in a crucible having a weight of W1, 1 g to 2 g of the recycled material was placed, and a weight of the crucible containing the recycled material was measured and regarded as W2; (3) an electric furnace was used to maintain the crucible containing the recycled material at 300°C for not less than 30 minutes and then maintain the crucible at 750°C for not less than 1 hour, so that the recycled material was burned; (4) the crucible was taken out from the electric furnace and cooled in a desiccator at 23°C for 1 hour; (5) a weight of the cooled crucible was measured and regarded as W3; and (6) an ash content A was determined from the

following equation.

W1: Weight of crucible
W2: Weight of crucible and recycled material before burning
W3: Weight of crucible and recycled material after burning A=(W3-W1)×100/(W2-W1)

<Qualitative analysis of ash>

Infrared spectroscopic analysis was used to determine that the ash in the recycled material is talc. A specific operational procedure was as described in the following (1) and (2): (1) attenuated total reflection was carried out under a resolution of 4 $cm^{-1}$ and the number of scans of 16 in a state in which the ash obtained above was pressure-bonded to a crystal part of an attenuated total reflection device [Spectrum Two manufactured by The Perkin-Elmer Corp.], so that spectra at 500 $cm^{-1}$ to 4,000 $cm^{-1}$ were obtained; and (2) in the obtained spectra, peaks were observed at four locations around 3,700 $cm^{-1}$, around 1,020 $cm^{-1}$, around 670 $cm^{-1}$, and around 550 $cm^{-1}$. Given that a spectral shape in which peaks are observed at four locations around 3,700 $cm^{-1}$, around 1,020 $cm^{-1}$, around 670 $cm^{-1}$, and around 550 $cm^{-1}$ is a spectral shape specific to talc, the ash contained in the recycled material was determined to be talc.

<Measurement of DSC ratio of polypropylene-based resin expanded particles>

A differential scanning calorimeter [DSC7020 manufactured by Hitachi High-Tech Science Corporation] was used to measure a DSC ratio of the expanded particles. A specific operational procedure was as described in the following (1) to (5): (1) 5 mg to 6 mg of polypropylene-based resin expanded particles was measured out; (2) a temperature of the expanded particles was increased from 40°C to 220°C at a temperature increase rate of 10°C/min, and the expanded particles were melted; (3) in a DSC curve of the expanded particles which was obtained in the process (2) (DSC curve of the expanded particles which was obtained during the first temperature increase), (a) a local maximum between a melting peak at the highest temperature and a melting peak adjacent to the melting peak (on the low temperature side) and a point representing a temperature before a start of melting were connected by a straight line, and (b) the local maximum and a point representing a temperature after an end of melting were connected by a straight line; (4) (a) a heat quantity calculated from a region enclosed by (a-1) a line segment connecting the local maximum and the point representing the temperature after the end of melting and (a-2) the DSC curve having the melting peak at the highest temperature was regarded as a high temperature-side melting heat quantity Qh, (b) a heat quantity calculated from a region enclosed by (b-1) a line segment connecting the local maximum and the point representing the temperature before the start of melting and (b-2) the DSC curve having the melting peak adjacent to the local maximum (on the low temperature side) was regarded as a low temperature-side melting heat quantity Ql, and (c) the high temperature-side melting heat quantity Qh was set; and (5) the DSC ratio was calculated from the following equation:

$$\text{DSC ratio } (\%) = Qh/(Qh+Ql) \times 100$$

<Expansion rate of polypropylene-based resin expanded particles>

A method for measuring an expansion rate of the expanded particles was as described in the following (1) to (4): (1) a weight w (g) of the expanded particles was measured; (2) next, the expanded particles used to measure the weight were submerged in ethanol in a graduated cylinder, and a volume v ($cm^3$) of the expanded particles was measured on the basis of an increase in liquid surface position in the graduated cylinder; (3) the weight w (g) was divided by the volume v ($cm^3$), and a density $\rho_1$ of the expanded particles was calculated; and (4) a density $\rho_2$ of the polypropylene-based resin particles used to produce the expanded particles was divided by the density $\rho_1$ of the expanded particles ($\rho_2/\rho_1$), and a resulting value was regarded as the expansion rate.

<Average cell diameter of expanded particles>

A method for measuring an average cell diameter of the expanded particles was as described in the following (1) to (5): (1) while special caution was exercised so that a cell membrane of an expanded particle was not destroyed, a blade razor (high stainless steel double-beveled blade manufactured by FEATHER Safety Razor Co., Ltd.) was used to cut the expanded particle so that the blade razor passed through a center of the expanded particle; (2) a microscope [RH-2000 manufactured by HIROX Co., Ltd.] was used to observe a resulting cut surface of the expanded particle, and an image of the observed surface was obtained; (3) in the image thus obtained, a line segment having a length equivalent to 2,000 μm was drawn on any part, other than a surface layer part, of the expanded particle; (4) the number n of cells through which the

line segment passed was counted, and a cell diameter was calculated by an expression (cell diameter = 2,000/n (μm)); and (5) a similar operation was carried out with respect to 10 expanded particles, and an arithmetic mean value of calculated cell diameters was regarded as the average cell diameter of the expanded particles.

<Density of expanded molded product>

A weight (g) (referred to as W) of a resulting expanded molded product was measured. Next, a vernier caliper was used to measure longitudinal, transverse, and thickness dimensions of the expanded molded product and calculate a volume (unit: 1,000 $cm^3$, i.e., L) (referred to as V). Subsequently, an expanded molded product density (g/L) was determined by an expression (density of expanded molded product = W/V).

<Measurement of blackness and color unevenness of expanded molded product>

A spectroscopic colorimeter [CM-26dG manufactured by KONICA MINOLTA JAPAN, INC.] was used to measure L values at 50 arbitrary locations on a surface of the expanded molded product, and an average of the L values was regarded as blackness. Note that reflected light during measurement was limited to diffused reflected light. Further, a standard deviation of the measured L values was regarded as color unevenness. Blackness and color unevenness were evaluated by the following respective criteria. A greater numerical value is intended to mean more excellent blackness and reduced color unevenness.

(Blackness)

1 (Excellent): An average of the measured L values being less than 28
0 (Poor): The average of the measured L values being not less than 28

(Color unevenness)

1 (Excellent): The standard deviation of the measured L values being less than 2
0 (Poor): The standard deviation of the measured L values being not less than 2

<Evaluation of flame retardancy of polypropylene-based resin in-mold expanded molded product>

A flame retardancy test sample measuring 350 mm in length, 100 mm in width, 12 mm in thickness was cut out from a resulting expanded molded product, and an A marked line and a B marked line were provided at positions of 38 mm and 292 mm, respectively, from a lengthwise end of the sample. Flame retardancy was evaluated in accordance with a burning test method specified in FMVSS302. An FMVSS flammability tester [manufactured by Suga Test Instruments Co., Ltd.] was used to apply, to the lengthwise end of the sample for 15 seconds, flame of a burner which flame was prepared to a height of 38 mm so that a sample end was at a center of the flame. On the basis of a situation of burning at that time, flame retardancy was evaluated by the following criteria. A greater numerical value is intended to mean more excellent flame retardancy.

1 (Excellent): The sample in which the flame is extinguished before reaching the A marked line, or within 60 seconds or 50 mm after the flame has passed through the A marked line. Such a property is referred to as having a "self-extinguishing property".
0 (Poor): The sample in which a burning rate is not more than 100 mm/min in a case where the flame is burned beyond the A marked line [38 mm from the sample end to which the flame is applied] and burned until reaching the B marked line [292 mm from the sample end to which the flame is applied], and in a case where the flame is burned beyond the A marked line and extinguished beyond 60 seconds or beyond 50 mm after having passed through the A marked line. Such a property is referred to as a "slow burning property".

- 1 (Very poor): The sample which is not determined to have the self-extinguishing property or the slow burning property. Such a property is referred to as "flammability".

<Evaluation of surface property of polypropylene-based resin in-mold expanded molded product>

A surface of the resulting in-mold expanded molded product was visually observed, and a surface property was determined by the following criteria. An inter-particle dimple (gap between polypropylene-based resin expanded particles), which is one of evaluation indexes for the surface property, was determined by visually counting the number of inter-particle dimples present in a 50 mm × 50 mm square at a center of a surface of the molded product. A greater numerical value is intended to mean a more excellent surface property.

2 (Good): There is zero to one inter-particle dimple (gap between polypropylene-based resin expanded particles), there is no wrinkle, and the surface is beautiful.
1 (Not bad): There are two to three inter-particle dimples, and there is no wrinkle.
0 (Bad): There are four or more inter-particle dimples, and a wrinkle is observed.

The following description will discuss a method for producing polypropylene-based resin particles, polypropylene-based resin expanded particles, and a polypropylene-based resin in-mold expanded molded product in Examples and Comparative Examples.

(Example 1)

[Production of resin particles]

A mixture was obtained by using a blender to dry-blend (a) 75 parts by weight of the non-recycled polypropylene-based resin (ethylene/ 1-butene/propylene random copolymer), (b) 25 parts by weight of the recycled material 1, (c) 3 parts by weight of the carbon black A, (d) 0.2 parts by weight of glycerin, (e) 0.05 parts by weight of talc, and (f) 0.10 parts by weight of the hindered amine-based flame retarder. A twin-screw extruder [TEM26-SX manufactured by Toshiba Machine Co., Ltd.] was used to melt and knead the obtained mixture at a resin temperature of 220°C, and an extruded strand was cooled with water in a 2 m length water tank and then cut, so that polypropylene-based resin particles (1.2 mg/particle) were produced.

[Production of expanded particles and expanded molded product]

Into a pressure-resistant autoclave having a capacity of 10 L, 100 parts by weight (2.4 kg) of the polypropylene-based resin particles obtained as described above, 200 parts by weight of water, 0.3 parts by weight of kaolin [ASP170 manufactured by BASF] as a dispersing agent, and 0.038 parts by weight of an aqueous sodium dodecylbenzene sulfonate solution [NEOPELEX G-15, which is an aqueous solution of 16% sodium dodecylbenzene sulfonate, manufactured by Kao Corporation] as a dispersion auxiliary agent were introduced, and then 4 parts by weight of carbon dioxide as a blowing agent was added under stirring. The contents of the autoclave were heated to an expansion temperature of 155.5°C and maintained for 10 minutes. Then, carbon dioxide was additionally impregnated so as to increase an internal pressure of the autoclave to an expansion pressure of 2.2 MPa. An inside of the autoclave was maintained at the above expansion temperature and the above expansion pressure for 20 minutes, and then a valve in a lower part of the autoclave was opened. Through an open orifice measuring 3.6 mm in diameter, the contents of the autoclave were released under atmospheric pressure, so that polypropylene-based resin expanded particles having an expansion rate of 17 times were obtained. In this case, during the release, in order to prevent a reduction in internal pressure of the vessel, carbon dioxide was impregnated so that the internal pressure of the vessel was maintained.

Resulting expanded particles were dried at 80°C and then impregnated with pressurized air in a pressure-resistant vessel so that the internal pressure was set to 0.3 MPa (absolute pressure). Thereafter, the expanded particles were brought into contact with steam at 0.07 MPa (gage pressure), so that the expanded particles were subjected to second-step expansion. Resulting second-step expanded particles had an expansion rate of 25 times.

The resulting second-step expanded particles were introduced into a pressure-resistant vessel and impregnated with pressurized air. Polypropylene-based resin expanded particles, which had been adjusted in advance to have an internal-expanded particle pressure of 0.20 MPa (absolute pressure), were filled in a mold measuring 370 mm in length, 320 mm in width, and 50 mm in thickness. Thereafter, an inside of a mold chamber was heated with steam at 0.30 MPa so that expanded particles were fused together. An inside of the mold and a surface of a molded product were cooled with water, and then the molded product was taken out, so that a polypropylene-based resin in-mold expanded molded product was obtained. A resulting in-mold expanded molded product was left to stand at 23°C for 2 hours and then cured at 75°C for 16 hours.

(Examples 2 and 3)

Polypropylene-based resin particles, polypropylene-based resin expanded particles, and a polypropylene-based resin in-mold expanded molded product were produced by an operation identical to the operation in Example 1, except that composition was changed in [Production of resin particles] as shown in Table 1 or 2 and that an expansion condition was changed in [Production of expanded particles and expanded molded product] as shown in Table 1 or 2.

(Examples 4 and 5)

A mixture was obtained by using a blender to dry-blend (a) the non-recycled polypropylene-based resin in an amount shown in Table 1, (b) the recycled materials 1 and 2 in respective amounts shown in Table 1, (c) 3 parts by weight of the carbon black A, (d) 0.2 parts by weight of glycerin, (e) 0.05 parts by weight of talc, and (f) 0.10 parts by weight of the hindered amine-based flame retarder. A twin-screw extruder identical to that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 1.

(Comparative Example 1)

A mixture was obtained by using a blender to dry-blend (a) the non-recycled polypropylene-based resin in an amount shown in Table 1, (b) the recycled materials 1 and 2 in respective amounts shown in Table 1, (c) 0.2 parts by weight of glycerin, (d) 0.05 parts by weight of talc, and (e) 0.10 parts by weight of the hindered amine-based flame retarder. A twin-screw extruder identical to that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 2.

(Comparative Example 2)

A mixture was obtained by using a blender to dry-blend (a) the recycled material 1 in an amount shown in Table 1, (b) 3 parts by weight of the carbon black A, (c) 0.2 parts by weight of glycerin, (d) 0.05 parts by weight of talc, and (e) 0.10 parts by weight of the hindered amine-based flame retarder. A twin-screw extruder identical to that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 2.

(Comparative Example 3)

A mixture was obtained by using a blender to dry-blend (a) the recycled materials 1 and 2 in respective amounts shown in Table 1, (b) 3 parts by weight of the carbon black A, (c) 0.2 parts by weight of glycerin, (d) 0.05 parts by weight of talc, and (e) 0.10 parts by weight of the hindered amine-based flame retarder. A twin-screw extruder identical to that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 2.

(Reference Example 1)

A mixture was obtained by using a blender to dry-blend (a) 100 parts by weight of the non-recycled polypropylene-based resin, (b) 3 parts by weight of the carbon black A, (c) 0.2 parts by weight of glycerin, (d) 0.05 parts by weight of talc, and (e) 0.10 parts by weight of the hindered amine-based flame retarder. A twin-screw extruder identical to

that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 2. Table 2 shows results of evaluation of the obtained polypropylene-based resin expanded particles and the obtained polypropylene-based resin in-mold expanded molded product.

(Reference Example 2)

A mixture was obtained by using a blender to dry-blend (a) 100 parts by weight of the non-recycled polypropylene-based resin, (b) 3 parts by weight of the carbon black A, (c) 0.2 parts by weight of glycerin, (d) 0.25 parts by weight of talc, and (e) 0.10 parts by weight of the hindered amine-based flame retarder. A twin-screw extruder identical to that used in Example 1 was used to melt and knead the obtained mixture at a resin temperature of 220°C, and an extruded strand was cooled with water in a 2 m length water tank and then cut, so that polypropylene-based resin particles (1.2 mg/particle) were produced. Polypropylene-based resin expanded particles and a polypropylene-based resin in-mold expanded molded product were produced by an operation identical to the operation in Example 1, except that the expansion condition was changed in [Production of expanded particles and expanded molded product] as shown in Table 2.

Table 1 or 2 shows composition during production of the polypropylene-based resin particles in Examples, Comparative Examples, and Reference Examples. Note that, in Table 1 or 2, (i) an amount of the carbon black B is a sum of an amount of the carbon black B derived from the recycled material and an amount of the carbon black B separately added, and (ii) an amount of talc is a sum of an amount of talc derived from the recycled material and an amount of talc separately added.

Various measurements and evaluations were carried out with respect to the polypropylene-based resin expanded particles obtained in Examples, Comparative Examples, and Reference Examples, and the polypropylene-based resin in-mold expanded molded products obtained in Examples, Comparative Examples, and Reference Examples. Results of the measurements and evaluations are shown in Table 1 or 2.

[Table 1]

(Table 1)

| | | | | Example 1 | Example 2 | Example 3 |
|---|---|---|---|---|---|---|
| Base resin | Non-recycled polypropylene-based resin | Ethylene/1-butene/propylene random copolymer | Part by weight | 75 | 70 | 50 |
| | Recycled resin | Ethylene/propylene random copolymer | Part by weight | 25 | 30 | 50 |
| | | High-density polyethylene (HDPE) | Part by weight | 0 | 0 | 0 |
| | Recycled resin ratio in 100 % by weight of base resin | | % by weight | 25 | 30 | 50 |

(continued)

| | | | | Example 1 | Example 2 | Example 3 |
|---|---|---|---|---|---|---|
| Additive | Carbon black | Carbon black A | Part by weight | 3.0 | 3.0 | 3.0 |
| | | Carbon black B | Part by weight | 0.75 | 0.90 | 1.50 |
| | Expansion nucleating agent | Talc (total mixed amount) | Part by weight | 0.25 | 0.29 | 0.45 |
| | Water absorbing substance | Glycerin | Part by weight | 0.20 | 0.20 | 0.20 |
| | Flame retarder | Hindered amine-based flame retarder | Part by weight | 0.10 | 0.10 | 0.10 |
| Expanded particles | Carbon black | Ratio of number of carbon black pieces having structure size per one structure of less than $1\times10^4$ $nm^2$ to total number of pieces of carbon black | % | 22 | 20 | 18 |
| | Expansion condition | Expansion temperature | °C | 155.5 | 156.4 | 158.9 |
| | | Expansion pressure | MPa | 2.2 | 2.2 | 2.2 |
| | Physical properties | DSC ratio | % | 20.0 | 22.1 | 24.1 |
| | | Expansion rate | Time | 25 | 25 | 25 |
| | | Average cell diameter | μm | 200 | 200 | 150 |
| Expanded molded product | Physical properties | Density | g/L | 23 | 23 | 23 |
| | | Blackness | - | 1 | 1 | 1 |
| | | Color unevenness | - | 1 | 1 | 1 |
| | | Flame retardancy | - | 1 | 1 | 1 |
| | | Surface property | - | 1 | 1 | 1 |

(Table 1)

| | | | | Example 4 | Example 5 |
|---|---|---|---|---|---|
| Base resin | Non-recycled polypropylene-based resin | Ethylene/1-butene/propylene random copolymer | Part by weight | 75 | 50 |
| | Recycled resin | Ethylene/propylene random copolymer | Part by weight | 20 | 42 |
| | | High-density polyethylene (HDPE) | Part by weight | 5 | 8 |
| | Recycled resin ratio in 100 % by weight of base resin | | % by weight | 25 | 50 |

(continued)

| | | | | Example 4 | Example 5 |
|---|---|---|---|---|---|
| Additive | Carbon black | Carbon black A | Part by weight | 3.0 | 3.0 |
| | | Carbon black B | Part by weight | 0.60 | 1.26 |
| | Expansion nucleating agent | Talc (total mixed amount) | Part by weight | 0.25 | 0.45 |
| | Water absorbing substance | Glycerin | Part by weight | 0.20 | 0.20 |
| | Flame retarder | Hindered amine-based flame retarder | Part by weight | 0.10 | 0.10 |
| Expanded particles | Carbon black | Ratio of number of carbon black pieces having structure size per one structure of less than $1\times10^4$ $nm^2$ to total number of pieces of carbon black | % | 23 | 19 |
| | Expansion condition | Expansion temperature | °C | 155.3 | 158.8 |
| | | Expansion pressure | MPa | 2.2 | 2.2 |
| | Physical properties | DSC ratio | % | 22.3 | 24.5 |
| | | Expansion rate | Time | 25 | 25 |
| | | Average cell diameter | μm | 200 | 150 |
| Expanded molded product | Physical properties | Density | g/L | 23 | 23 |
| | | Blackness | - | 1 | 1 |
| | | Color unevenness | - | 1 | 1 |
| | | Flame retardancy | - | 1 | 1 |
| | | Surface property | - | 2 | 2 |

[Table 2]

(Table 2)

| | | | | Comparative Example 1 | Comparative Example 2 | Comparative Example 3 |
|---|---|---|---|---|---|---|
| Base resin | Non-recycled polypropylene-based resin | Ethylene/1-butene/-propylene random copolymer | Part by weight | 75 | 0 | 0 |
| | Recycled resin | Ethylene/propylene random copolymer | Part by weight | 20 | 100 | 84 |
| | | High-density polyethylene (HDPE) | Part by weight | 5 | 0 | 16 |
| | Recycled resin ratio in 100 % by weight of base resin | | % by weight | 25 | 100 | 100 |

(continued)

| | | | | Comparative Example 1 | Comparative Example 2 | Comparative Example 3 |
|---|---|---|---|---|---|---|
| Additive | Carbon black | Carbon black A | Part by weight | 0.0 | 3.0 | 3.0 |
| | | Carbon black B | Part by weight | 0.60 | 3.0 | 2.52 |
| | Expansion nucleating agent | Talc (total mixed amount) | Part by weight | 0.25 | 0.75 | 0.75 |
| | Water absorbing substance | Glycerin | Part by weight | 0.20 | 0.20 | 0.20 |
| | Flame retarder | Hindered amine-based flame retarder | Part by weight | 0.10 | 0.10 | 0.10 |
| Expanded particles | Carbon black | Ratio of number of carbon black pieces having structure size per one structure of less than $1\times10^4$ $nm^2$ to total number of pieces of carbon black | % | 8 | 9 | 9 |
| | Expansion condition | Expansion temperature | °C | 155.5 | 156.4 | 156.4 |
| | | Expansion pressure | MPa | 2.2 | 2.2 | 2.2 |
| | Physical properties | DSC ratio | % | 21.0 | 21.9 | 22.2 |
| | | Expansion rate | Time | 25 | 25 | 25 |
| | | Average cell diameter | μm | 150 | 90 | 90 |
| Expanded molded product | Physical properties | Density | g/L | 23 | 23 | 23 |
| | | Blackness | - | 0 | 1 | 1 |
| | | Color unevenness | - | 1 | 1 | 1 |
| | | Flame retardancy | - | 1 | 0 | 0 |
| | | Surface property | - | 1 | 1 | 1 |

(Table 2)

| | | | | Reference Example 1 | Reference Example 2 |
|---|---|---|---|---|---|
| Base resin | Non-recycled polypropylene-based resin | Ethylene/1-butene/propylene random copolymer | Part by weight | 100 | 100 |
| | Recycled resin | Ethylene/propylene random copolymer | Part by weight | 0 | 0 |
| | | High-density polyethylene (HDPE) | Part by weight | 0 | 0 |
| | Recycled resin ratio in 100 % by weight of base resin | | % by weight | 0 | 0 |

(continued)

| | | | | Reference Example 1 | Reference Example 2 |
|---|---|---|---|---|---|
| Additive | Carbon black | Carbon black A | Part by weight | 3.0 | 3.0 |
| | | Carbon black B | Part by weight | 0.00 | 0.00 |
| | Expansion nucleating agent | Talc (total mixed amount) | Part by weight | 0.05 | 0.25 |
| | Water absorbing substance | Glycerin | Part by weight | 0.20 | 0.20 |
| | Flame retarder | Hindered amine-based flame retarder | Part by weight | 0.10 | 0.10 |
| Expanded particles | Carbon black | Ratio of number of carbon black pieces having structure size per one structure of less than $1\times10^4$ $nm^2$ to total number of pieces of carbon black | % | 53 | 53 |
| | Expansion condition | Expansion temperature | °C | 153.1 | 153.1 |
| | | Expansion pressure | MPa | 2.2 | 2.2 |
| | Physical properties | DSC ratio | % | 21.2 | 20.7 |
| | | Expansion rate | Time | 25 | 25 |
| | | Average cell diameter | μm | 200 | 150 |
| Expanded molded product | Physical properties | Density | g/L | 23 | 23 |
| | | Blackness | - | 1 | 1 |
| | | Color unevenness | - | 1 | 0 |
| | | Flame retardancy | - | 1 | 1 |
| | | Surface property | - | 1 | 1 |

In Reference Examples 1 and 2, results of evaluation of conventional expanded particles containing no recycled material are shown. As can be seen from a comparison between Reference Examples 1 and 2, it has been conventionally confirmed that an increase in amount of talc, contained in resin particles, from 0.05 parts by weight to 0.25 parts by weight results in a smaller average cell diameter and more color unevenness. In Examples 1 to 5, results of evaluation of the polypropylene-based resin expanded particles and the polypropylene-based resin in-mold expanded molded product in accordance with an embodiment of the present invention are shown. As can be seen from Examples 1 to 5, even in a case where an in-mold expanded molded product composed of polypropylene-based resin expanded particles obtained by the present production method contains not less than 0.25 parts by weight of talc, the in-mold expanded molded product has no color unevenness, has excellent blackness and excellent surface appearance, and also has good flame retardancy. A decrease in ratio of the carbon black having a structure size of less than $1.0\times10^4$ $nm^2$ as in Comparative Examples 1 to 3 resulted in room for improvement in blackness and flame retardancy.

Industrial Applicability

Polypropylene-based expanded particles in accordance with an embodiment of the present invention bring about an advantage of making it possible to improve blackness and flame retardancy after molding. A polypropylene-based expanded molded product can be suitably used in various applications such as shock-absorbing packing materials, shipping materials, heat insulating materials, civil engineering and construction materials, and automotive components.

## Claims

1. Polypropylene-based resin expanded particles comprising a base resin and carbon black,

   the base resin containing (i) a non-recycled polypropylene-based resin and (ii) a recycled polypropylene-based resin and/or a recycled polyethylene-based resin,
   a total content of the recycled polypropylene-based resin and the recycled polyethylene-based resin being 10 parts by weight to 60 parts by weight in 100 parts by weight of the base resin, and
   a ratio of the number of carbon black pieces having a structure size per one structure of less than $1\times10^4$ $nm^2$ to a total number of pieces of the carbon black being 10% to 50%.

2. The polypropylene-based resin expanded particles as set forth in claim 1, wherein the polypropylene-based resin expanded particles contain carbon black A having an average structure size of not less than $0.2\times10^4$ $nm^2$ and less than $4.0\times10^4$ $nm^2$, and carbon black B having an average structure size of not less than $5.0\times10^4$ $nm^2$ and less than $9.0\times10^4$ $nm^2$.

3. The polypropylene-based resin expanded particles as set forth in claim 1 or 2, further comprising an expansion nucleating agent.

4. The polypropylene-based resin expanded particles as set forth in claim 3, wherein the expansion nucleating agent is contained in an amount of 0.05 parts by weight to 0.50 parts by weight with respect to 100 parts by weight of the base resin.

5. The polypropylene-based resin expanded particles as set forth in claim 3, wherein the expansion nucleating agent is contained in an amount of 0.20 parts by weight to 0.50 parts by weight with respect to 100 parts by weight of the base resin.

6. The polypropylene-based resin expanded particles as set forth in any one of claims 3 to 5, wherein the expansion nucleating agent is talc.

7. The polypropylene-based resin expanded particles as set forth in any one of claims 1 to 6, further comprising a hindered amine-based flame retarder.

8. The polypropylene-based resin expanded particles as set forth in claim 2, wherein the carbon black A is contained in an amount of 0.1 parts by weight to 5.0 parts by weight with respect to 100 parts by weight of the base resin.

9. The polypropylene-based resin expanded particles as set forth in claim 2, wherein the carbon black B is contained in an amount of 0.10 parts by weight to 2.00 parts by weight with respect to 100 parts by weight of the base resin.

10. The polypropylene-based resin expanded particles as set forth in any one of claims 1 to 9, wherein the base resin contains the recycled polyethylene-based resin, and the recycled polyethylene-based resin contains a recycled high-density polyethylene-based resin.

11. The polypropylene-based resin expanded particles as set forth in any one of claims 1 to 10, wherein the recycled polypropylene-based resin is contained in an amount of 60 parts by weight to 100 parts by weight, and the recycled polyethylene-based resin is contained in an amount of 0 part by weight to 40 parts by weight, where the total content of the recycled polypropylene-based resin and the recycled polyethylene-based resin is 100 parts by weight.

12. The polypropylene-based resin expanded particles as set forth in any one of claims 1 to 11, wherein the polypropylene-based resin expanded particles contain no carbon black C having an average structure size of not less than $10.0\times10^4$ $nm^2$, or contain the carbon black C in an amount of less than 0.5 parts by weight with respect to 100 parts by weight of the base resin.

13. The polypropylene-based resin expanded particles as set forth in any one of claims 1 to 12, wherein the non-recycled polypropylene-based resin contains, in 100% by weight of the non-recycled polypropylene-based resin, not less than 60% by weight of at least one selected from the group consisting of an ethylene/propylene alternating copolymer, an ethylene/1-butene/propylene alternating copolymer, an ethylene/propylene random copolymer, and an ethylene/1-butene/propylene random copolymer.

**14.** The polypropylene-based resin expanded particles as set forth in any one of claims 1 to 13, wherein the base resin contains the recycled polypropylene-based resin, and the recycled polypropylene-based resin contains at least one selected from the group consisting of an ethylene/propylene alternating copolymer, an ethylene/1-butene/propylene alternating copolymer, an ethylene/propylene random copolymer, and an ethylene/propylene random copolymer.

**15.** The polypropylene-based resin expanded particles as set forth in any one of claims 1 to 14, wherein the base resin contains the non-recycled polypropylene-based resin, the recycled polypropylene-based resin, and the recycled polyethylene-based resin in a total amount of 80 parts by weight to 100 parts by weight in 100 parts by weight of the base resin.

**16.** A polypropylene-based resin expanded molded product obtained by molding polypropylene-based resin expanded particles recited in any one of claims 1 to 15.

**17.** A method for producing polypropylene-based resin expanded particles, comprising:

a granulation step of melting and kneading a mixture so as to obtain polypropylene-based resin particles, the mixture containing a non-recycled polypropylene-based resin, a recycled material, and carbon black A having an average structure size of not less than $0.2\times10^4$ $nm^2$ and less than $4.0\times10^4$ $nm^2$;
a dispersion step of dispersing the polypropylene-based resin particles, an aqueous dispersion medium, and a blowing agent in a vessel;
a heating step of increasing a temperature in the vessel to a temperature that is not less than a softening temperature of the polypropylene-based resin particles;
a pressurization step of raising an internal pressure of the vessel; and
a releasing step of releasing one end of the vessel so as to release a dispersion slurry inside the vessel into a region having a pressure lower than the internal pressure of the vessel,
the recycled material containing (i) a recycled polypropylene-based resin and/or a recycled polyethylene-based resin and (ii) carbon black B having an average structure size of not less than $5.0\times10^4$ $nm^2$ and less than $9.0\times10^4$ $nm^2$, and
the recycled material being used in an amount such that a total content of the recycled polypropylene-based resin and the recycled polyethylene-based resin is 10 parts by weight to 60 parts by weight in 100 parts by weight of the base resin containing the non-recycled polypropylene-based resin and the recycled polypropylene-based resin and/or the recycled polyethylene-based resin.

## INTERNATIONAL SEARCH REPORT

International application No.
**PCT/JP2023/012742**

### A. CLASSIFICATION OF SUBJECT MATTER

***C08J 9/18***(2006.01)i
FI: C08J9/18 CES

According to International Patent Classification (IPC) or to both national classification and IPC

### B. FIELDS SEARCHED

Minimum documentation searched (classification system followed by classification symbols)

C08J9/00-9/42; B29C44/00-44/60; B29C67/20; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-209145 A (KANEKA CORP.) 24 September 2010 (2010-09-24) whole document | 1-17 |
| A | JP 7-310076 A (AGCY. OF IND. SCIENCE & TECHNOL.) 28 November 1995 (1995-11-28) whole document | 1-17 |
| A | WO 2013/094529 A1 (KANEKA CORP.) 27 June 2013 (2013-06-27) whole document | 1-17 |
| A | KR 10-2011-0093302 A (SONG, Jong Hyeok) 18 August 2011 (2011-08-18) whole document | 1-17 |
| A | CN 105885241 A (WUXI HUITONG LIGHT MAT. CO., LTD.) 24 August 2016 (2016-08-24) whole document | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/012742**

| Patent document cited in search report | Publication date (day/month/year) | Patent family member(s) | Publication date (day/month/year) |
|---|---|---|---|
| JP 2010-209145 A | 24 September 2010 | (Family: none) | |
| JP 7-310076 A | 28 November 1995 | (Family: none) | |
| WO 2013/094529 A1 | 27 June 2013 | US 2014/0346411 A1<br>whole document<br>EP 2796489 A1<br>CN 104024315 A | |
| KR 10-2011-0093302 A | 18 August 2011 | (Family: none) | |
| CN 105885241 A | 24 August 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006075491 A
- JP 2011173273 A
- EP 0889085 A
- EP 2225318 A
- EP 0309402 A
- US 8598369 B
- WO 2022149538 A


### Non-patent literature cited in the description


- *CHEMICAL ABSTRACTS*, 191680-81-6